(19) **Europäisches Patentamt / European Patent Office / Office européen des brevets**

(11) **EP 3 121 248 B1**

(12) **FASCICULE DE BREVET EUROPEEN**

(45) Date de publication et mention
de la délivrance du brevet:
**07.02.2018 Bulletin 2018/06**

(21) Numéro de dépôt: **16305930.6**

(22) Date de dépôt: **20.07.2016**

(51) Int Cl.:
*C10G 3/00* *(2006.01)*  *C10G 45/62* *(2006.01)*
*C10G 65/04* *(2006.01)*  *C10G 49/00* *(2006.01)*
*C10L 1/04* *(2006.01)*  *C10L 1/06* *(2006.01)*
*C10L 1/08* *(2006.01)*

(54) **PROCÉDÉ D'HYDROTRAITEMENT DE MATIÈRES RENOUVELABLES AVEC UN RECYCLE GAZ OPTIMISÉ**

WASSERSTOFFBEHANDLUNGSVERFAHREN FÜR ERNEUERBARE MATERIALIEN DURCH OPTIMIERTES GASRECYCLING

METHOD FOR HYDROTREATING RENEWABLE MATERIALS WITH IMPROVED GAS RECYCLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2015 FR 1557053**

(43) Date de publication de la demande:
**25.01.2017 Bulletin 2017/04**

(73) Titulaire: **IFP Energies nouvelles**
**92500 Rueil-Malmaison (FR)**

(72) Inventeurs:
• **Chapus, Thierry**
**69001 Lyon (FR)**
• **Bazer-Bachi, Frederic**
**30340 Saint Privat Des Vieux (FR)**
• **Tellier, Elodie**
**69003 Lyon (FR)**
• **Scharff, Yves**
**78360 Montesson (FR)**
• **Fedou, Stéphane**
**75002 Paris (FR)**
• **Carvalho, Octavio**
**75005 Paris (FR)**
• **Boucher, Sébastien**
**78400 Chatou (FR)**

(56) Documents cités:
**EP-A1- 1 741 768     EP-A1- 2 428 547**
**US-A1- 2012 004 479**

**Description**

**Domaine technique**

L'invention concerne un procédé pour la production d'hydrocarbures paraffiniques utilisables comme carburants à partir de matières renouvelables telles que les huiles et graisses d'origine végétale ou animale.

Le contexte international actuel est marqué d'abord par la croissance rapide en besoin de carburants, en particulier de bases gazoles et kérosènes et ensuite par l'importance des problématiques liées au réchauffement planétaire et l'émission de gaz à effet de serre. Il en résulte une volonté de réduire la dépendance énergétique vis à vis des matières premières d'origine fossile et de réduction des émissions de $CO_2$. Dans ce contexte, la recherche de nouvelles charges issues de sources renouvelables constitue un enjeu d'une importance croissante. Parmi ces charges, on peut citer par exemple les huiles végétales (alimentaires ou non) ou issues d'algues et les graisses animales.

Ces charges sont principalement composées de triglycérides et d'acides gras libres, ces molécules comprenant des chaînes hydrocarbonées d'acides gras avec un nombre d'atomes de carbone compris entre 4 et 24, et un nombre d'insaturations généralement compris entre 0 et 3, avec des valeurs plus élevées pour les huiles d'algues par exemple. Les charges renouvelables contiennent des impuretés comme des composés azotés, et des métaux présents sous forme de phospholipides contenant des éléments comme le phosphore, le calcium, le magnésium, le fer, le potassium et le sodium.

La masse moléculaire très élevée (>600g/mol) des triglycérides et la viscosité élevée des charges considérées font que leur utilisation directe ou en mélange dans les bases carburants posent des difficultés pour les moteurs modernes. Cependant, les chaînes hydrocarbonées qui constituent les triglycérides sont essentiellement linéaires et leur longueur (nombre d'atomes de carbone) est compatible avec les hydrocarbures présents dans les bases carburants.

Il est donc nécessaire de transformer ces charges pour obtenir des bases carburants (y compris le diesel et le kérosène) de bonne qualité répondant notamment aux spécifications directement ou après mélange avec d'autres coupes issues de pétrole brut. Le diesel doit répondre à la spécification EN590 et le kérosène doit satisfaire aux exigences décrites dans le « International Air Transport Association matériel (IATA) Guidance Material for Aviation Turbine Fuel Spécifications » comme ASTM D1655.

Une approche possible est la transformation catalytique de triglycérides en carburant paraffinique désoxygéné en présence d'hydrogène (hydrotraitement).

Lors de l'hydrotraitement les réactions subies par la charge contenant les triglycérides sont les suivantes :

- la réaction d'hydrogénation des insaturations des chaînes hydrocarbonées des acides gras des triglycérides et esters,

- les réactions de désoxygénations selon deux voies réactionnelles :

  ◦ l'hydrodésoxygénation (HDO) conduisant à la formation d'eau par consommation d'hydrogène et à la formation d'hydrocarbures de nombre de carbone (Cn) égal à celui des chaînes d'acides gras initiales,

  ◦ la décarboxylation/décarbonylation conduisant à la formation d'oxydes de carbone (monoxyde et dioxyde de carbone : CO et $CO_2$) et à la formation d'hydrocarbures comptant un carbone en moins (Cn-1) par rapport aux chaînes d'acides gras initiales,

- les réactions d'hydrodéazotation (HDN), par laquelle on désigne les réactions permettant d'enlever l'azote de la charge avec la production de $NH_3$.

L'hydrogénation des insaturations des chaînes hydrocarbonées (double liaisons carbone-carbone) est fortement exothermique et l'augmentation de température provoquée par le dégagement de chaleur peut conduire à des niveaux de température où la part des réactions de décarboxylation devient significative. Les réactions d'hydrodésoxygénation, et les réactions de décarboxylation, sont également des réactions exothermiques. L'hydrodésoxygénation est généralement favorisée à plus basse température par rapport à la décarboxylation/décarbonylation qui induit une perte en rendement. Les réactions d'hydrodéazotation sont plus difficiles et nécessitent des températures supérieures à l'hydrogénation et l'hydrodésoxygénation.

Par conséquent, un contrôle strict de la température dans la section hydrotraitement est nécessaire, une température trop élevée présente l'inconvénient de favoriser les réactions secondaires indésirables comme la polymérisation, le craquage, le dépôt de coke et la désactivation du catalyseur.

### Art antérieur

Ainsi, le document EP 1 741 768 A1 qui décrit un procédé d'hydrotraitement d'une charge comprenant une charge fraiche huile végétale qui contient plus de 5% en poids d'acides gras libres, ce qui crée des réactions indésirables. Afin d'atténuer ce problème, il est proposé un procédé de production de gazole dans lequel une charge est hydrotraitée puis isomérisée, ladite charge comprenant une charge fraiche contenant plus de 5% poids d'acides gras libre et au moins un agent diluant, l'étape d'hydrotraitement étant réalisée à une température comprise entre 200 et 400°C et le ratio d'agent diluant à la charge fraîche étant dans la plage de 5 à 30 en poids. L'agent diluant peut être un composé hydrocarboné d'origine biologique ou non et est de préférence un produit recyclé issu du procédé. Le document EP 1 741 768 A1 décrit également que la teneur de la charge fraiche (huile végétale) dans la charge totale entrant dans l'étape d'hydrotraitement est inférieure à 20% poids.

Ainsi, il est mis en avant que la très large dilution de la charge fraiche avant son hydrotraitement permet de réduire la production de produits issus de réactions secondaires et d'améliorer la durée de vie du catalyseur pour permettre des conditions opératoires stables pendant environ 9 mois.

Toutefois, le procédé proposé dans le document EP 1 741 768 A1 a les inconvénients suivants :

- La quantité de recycle pour fournir la quantité nécessaire d'agent diluant est très élevée. L'utilisation d'un fort débit de liquide entraine une perte de charge élevée et nécessite une transformation considérable des unités existantes afin d'adapter les dimensions nécessaires du réacteur.

- La consommation d'hydrogène est réduite par la promotion de la désoxygénation par des réactions de décarboxylation (formation de CO et de $CO_2$ grâce à une sélection appropriée du catalyseur d'hydrotraitement. Toutefois, la désoxygénation des triglycérides par décarboxylation mène à une perte importante du rendement en paraffines, une perte de l'activité du catalyseur en raison de l'effet inhibiteur du CO et une corrosion augmentée en raison de la présence du $CO_2$.

Le document US2009/0318737 décrit un procédé pour produire des carburants (diesel) issus de matières premières renouvelables telles que les huiles et graisses d'origine végétale et animale. Le procédé consiste à traiter une première partie d'une matière première renouvelable par hydrogénation et par désoxygénation dans une première zone de réaction et une seconde partie d'une matière première renouvelable par hydrogénation et par désoxygénation dans une seconde zone de réaction. Une partie du produit hydrocarboné liquide obtenu est recyclée à la première zone de réaction pour augmenter la solubilité hydrogène du mélange réactionnel en utilisant un ratio recycle à la première partie de matières premières renouvelables compris entre 2 et 8 en volume (ratio massique entre 1,7 et 6,9). Le document US2009/0318737 décrit donc un taux de recycle local sur le premier lit compris entre 2 et 8 en volume (ratio massique entre 1,7 et 6,9). Le fait de maximiser la quantité d'hydrogène dans la phase liquide permet de réduire le taux de désactivation du catalyseur, ce qui permet de réduire la pression, de favoriser les réactions de décarboxylation/décarbonylation et de réduire les réactions d'hydrodésoxygénation, et donc de réduire la consommation d'hydrogène. Aucune information n'est donnée quant à la quantité d'azote dans les matières premières et les effluents paraffiniques.

Le document US2009/0082606 décrit un procédé de production de gazole à partir de charges issues de sources renouvelables telles que les huiles végétales. Le procédé consiste à traiter ladite charge dans une zone de réaction par hydrogénation et par désoxygénation en présence d'hydrogène pour produire des paraffines entre 8 et 24 atomes de carbones. Une portion du produit liquide de réaction est recyclée dans la zone de réaction à un ratio recycle sur charge en volume compris entre 2 et 8 (ratio massique entre 1,7 et 6,9). C'est la partie liquide du produit de réaction après séparation des composés gazeux qui est recyclé dans la zone de réaction. Le document US2009/0082606 décrit donc un taux de recycle liquide compris entre 2 et 8 en volume ou entre 1,7 et 6,9 (massique).

La demande EP 2 226 375 A1 décrit un procédé d'hydrogénation en continu d'une charge issue de sources renouvelables contenant des triglycérides dans un système de réacteur à lit fixe ayant plusieurs lits catalytiques comprenant un catalyseur d'hydrogénation et disposés en série dans lequel la charge, le gaz contenant l'hydrogène et un agent diluant sont injectés dans les lits catalytiques dans des conditions d'hydrogénation. La charge est introduite par une injection étagée de façon à ce que les différents lits catalytiques reçoivent de plus en plus de charge dans le sens de l'écoulement. L'agent diluant est uniquement ajouté aux flux de charge et de gaz contenant de l'hydrogène entrant dans le premier lit catalytique, l'agent diluant étant composé du produit d'hydrogénation formé dans chaque lit catalytique en plus de l'agent diluant ajouté qui est une fraction du produit hydrogéné obtenu par le procédé selon l'invention et qui est récupéré à la sortie du réacteur après séparation. Cette limitation de la quantité de produit recyclé dans le réacteur permet de limiter le débit total dans le réacteur, puis la charge hydraulique en aval du réacteur. Ainsi, le premier lit catalytique est alimenté par un mélange constitué d'un flux partiel de charge F1, d'un flux partiel de gaz contenant de l'hydrogène H1 et de l'agent diluant liquide ajouté recyclé. Le deuxième lit catalytique est alimenté par un mélange constitué d'un flux partiel de charge F2, d'un flux partiel de gaz contenant de l'hydrogène H2 ainsi que du produit hydrogéné issu du lit 1, du gaz contenant de l'hydrogène non réagi et de l'agent diluant ajouté en entrée du lit 1. Le ratio en poids d'agent diluant sur la charge est essentiellement le même à l'entrée de tous les lits catalytiques et est inférieur ou égal à 4. La demande EP 2 226 375 A1 décrit donc un taux de dilution pour chaque lit qui ne prend en compte que les flux liquides et ne prend pas en compte les flux de gaz.

Il est connu que l'utilisation d'un taux de recycle liquide important permet une meilleure gestion de l'exothermie et en particulier un maintien de la différence de température entre la température de sortie et d'entrée de chaque zone catalytique dans une gamme acceptable pour l'exploitation industrielle du procédé.

La demanderesse a cependant mis en évidence qu'un procédé d'hydrotraitement de charges issues de sources renouvelables mettant en oeuvre une injection étagée de charge dans les différentes zones catalytiques permettait une bonne gestion de l'exothermie sans pour autant imposer un recycle liquide important dans les différentes zones catalytiques, grâce au débit massique d'hydrogène envoyé vers la première zone catalytique qui représente plus de 80 % en poids du débit massique total d'hydrogène utilisé dans le procédé d'hydrotraitement.

### Résumé de l'invention

L'objectif de la présente invention est alors de proposer un procédé d'hydrotraitement de charges renouvelables permettant une gestion améliorée de l'exothermie tout en limitant la quantité de liquide recyclé.

Ainsi, la présente invention concerne un procédé d'hydrotraitement d'une charge issue de sources renouvelables pour produire des hydrocarbures paraffiniques en présence d'hydrogène dans un réacteur à lit fixe ayant plusieurs zones catalytiques disposées en série et comprenant chacune au moins un catalyseur d'hydrotraitement dans lequel :

a) le flux de la charge totale F est divisé en un nombre de différents flux partiels de charge F1 à Fn égal au nombre de zones catalytiques n, avec n entier compris entre 1 et 10 dans le réacteur, le premier flux partiel de charge F1 étant injecté dans la première zone catalytique Z1, le deuxième flux partiel de charge F2 étant injecté dans la deuxième zone catalytique Z2 et ainsi de suite, si n est supérieur à 2, le procédé d'hydrotraitement opérant à une température comprise entre 180 et 400°C, à une pression comprise entre 0,1 MPa et 15 MPa, à une vitesse spatiale horaire comprise entre 0,1 h-1 et 10 h-1, et avec un ratio entre le débit d'hydrogène et le débit de charge compris entre 150 et 1500 $Nm^3/m^3$, le débit massique d'hydrogène envoyé vers la première zone catalytique représentant plus de 80 % en poids du débit massique total d'hydrogène utilisé dans le procédé d'hydrotraitement, pour produire en sortie de réacteur au moins un effluent contenant des hydrocarbures paraffiniques,

b) ledit effluent issu de l'étape a) est soumis à au moins une étape de séparation permettant de séparer au moins une fraction gazeuse et au moins une fraction liquide contenant les hydrocarbures paraffiniques,

c) au moins une partie de ladite fraction liquide contenant les hydrocarbures paraffiniques est recyclée à la première zone catalytique et aux zones catalytiques suivantes de sorte que

- le taux de recycle local sur chacun des lits c'est-à-dire le rapport massique entre le flux de ladite fraction liquide recyclée et le flux partiel de charge introduit dans la zone catalytique Fn soit inférieur ou égal à 2, de préférence 1,7 de manière plus préférée 1,5..

- le taux de dilution local sur chacun des lits c'est-à-dire le rapport massique entre la quantité des flux liquides et gazeux dilauants introduits dans la zone catalytique n et le flux partiel de charge introduit dans la zone catalytique Fn soit inférieur à 4, de préférence inférieur à 3,8, de manière préférée inférieur à 3,5, de manière très préférée inférieur à 3, de manière plus préférée inférieur à 2,5 et de manière encore plus préférée inférieur à 2.

Un intérêt de la présente invention est de fournir un procédé qui malgré la mise en oeuvre d'un taux de recycle liquide faible et en particulier inférieure à 2 sur chacune des zones catalytiques, permet une gestion optimisée de l'exothermie au sein des différentes zones catalytiques, notamment grâce à la combinaison dudit taux de recycle faible sur chacune des zones catalytiques et d'un fort débit d'hydrogène à l'entrée du premier lit.

Un autre intérêt de la présente invention réside dans l'utilisation d'un recycle liquide faible qui facilite les revamping d'unités existantes. On entend par « revamping » selon la terminologie anglo-saxonne ou dégoulottage, la révision de la conception d'un équipement déjà en fonctionnement qui ne sont pas forcément des unités d'hydrotraitement d'huiles végétales, mais peuvent être par exemple des unités d'hydrotraitement de charge fossiles type diesel, pour en accroître la production, les performances techniques, économiques et environnementales ainsi que la fiabilité.

Un autre intérêt de la présente invention réside dans la diminution de la quantité de recycle liquide nécessaire ce qui limite la perte de charge et permet l'utilisation de réacteurs de dimensions plus petites, l'injection de l'hydrogène concentré en tête de réacteur permettant de conserver une bonne distribution sur le lit catalytique.

Un autre intérêt de l'invention, dans le cas préféré où le recycle gazeux riche en hydrogène est injecté à 100% en tête de réacteur, est de ne pas avoir d'injection de gaz dans les zones de refroidissement (quench) entre les lits, ce qui simplifie considérablement la conception de ces zones ainsi que le contrôle autour de ces zones.

Un autre intérêt de la présente invention consiste à privilégier la voie hydrodésoxygénation par élimination de l'oxygène et la formation de l'eau, plutôt que l'élimination de l'oxygène par des réactions de décarboxylation par le contrôle des températures adaptées à l'hydrodésoxygénation en entrée de chaque zone catalytique. Les avantages apportés par cette solution sont une augmentation du rendement des hydrocarbures paraffiniques, et la réduction de la quantité du $CO/CO_2$ formé, ce qui permet de limiter l'effet inhibiteur du CO sur l'activité du catalyseur d'hydrotraitement et permet ainsi permet une réduction de la quantité de catalyseur utilisé. Le fait de privilégier la voie hydrodésoxygénation permet également de réduire la corrosion due à la présence de $CO_2$ dans le réacteur et diminuer les besoins en amine nécessaire pour séparer le $CO_2$.

**Description de l'invention**

Le procédé selon la présente invention consiste à convertir en hydrocarbures paraffiniques, et plus précisément en distillats moyens (kérosènes et/ou gazoles), une large gamme de charges d'origine renouvelable, essentiellement composées de triglycérides et d'acides gras. Ces charges sont généralement caractérisées par une masse molaire élevée (supérieure à 800 g/mole le plus souvent), et les chaînes d'acides gras qui les composent ont un nombre d'atomes de carbone généralement compris entre 4 et 30, voire atteignant des valeurs supérieures et un nombre d'insaturations par chaîne généralement compris entre 0 et 3, avec des valeurs supérieures qui peuvent être atteintes sur certaines charges spécifiques.

Les charges issues de sources renouvelables selon l'invention sont avantageusement choisies parmi les huiles végétales, les huiles d'algues ou algales, les huiles de poissons, les huiles alimentaires usagées, et les graisses d'origine végétale ou animale, ou des mélanges de telles charges, contenant des triglycérides et/ou des acides gras libres et/ou des esters.

Parmi les charges qui peuvent être converties par le procédé selon la présente invention, on peut citer, cette liste n'étant pas exhaustive : les huiles végétales telles que les huiles de colza, de jatropha, de soja, de palme, de tournesol, d'olive, de coprah, de camelina, des huiles de poisson ou des huiles algales hétérotrophes ou autotrophes, ou encore des graisses animales telles que le suif de boeuf, ou encore des résidus issus de l'industrie papetière (tels que le "tall oil"), ou des mélanges de ces diverses charges.

Toutes ces charges contiennent des teneurs en oxygène élevées, ainsi que, à des teneurs très variables selon l'origine des charges, des composés soufrés, mais aussi des composés azotés, et des métaux comme le phosphore, le calcium, le magnésium, le potassium ou le sodium. La teneur en métaux peut aller jusqu'à 2500 ppm. Les teneurs en azote et en soufre sont généralement comprises entre 1 ppm et 100 ppm poids environ et de préférence inférieures à 100 ppm, selon leur nature. Elles peuvent atteindre jusqu'à 1% poids sur des charges particulières.

La charge traitée peut être brute, ou peut aussi avoir subi un traitement de raffinage ou pré-raffinage, dont le but est d'abaisser la teneur en métaux. Cette étape de prétraitement peut avoir été réalisée au préalable, ou dans une section de prétraitement placé en amont du réacteur d'hydrotraitement. Cette étape optionnelle de prétraitement peut consister en un traitement thermique, associé à un passage sur des solides tels que les alumines ou les silice-alumines, ou encore un traitement à la vapeur d'eau, ou encore un traitement à l'acide comme par exemple l'acide phosphorique, ou encore un traitement par résine échangeuse d'ions, ou encore une association de plusieurs de ces étapes de prétraitement. D'une manière générale, le prétraitement peut inclure toutes méthodes (dégommage, déphosphatation...) connus de l'homme du métier traitant du raffinage de l'huile à des fins alimentaires.

**Hydrotraitement**

Le procédé selon l'invention concerne un procédé d'hydrotraitement d'une charge issue de sources renouvelables pour produire des hydrocarbures paraffiniques en présence d'hydrogène dans un réacteur à lit fixe ayant plusieurs zones catalytiques disposées en série et comprenant chacune au moins un catalyseur d'hydrotraitement.

Selon l'invention, ladite charge est mélangée avec un gaz riche en hydrogène, pouvant également contenir d'autres composés hydrocarbures inertes, c'est à dire qui ne réagissent pas en tant que tels sur les catalyseurs d'hydrotraitement, contrairement aux constituants de la charge. L'hydrogène peut avantageusement venir d'un appoint d'hydrogène et/ou du recyclage du gaz riche en hydrogène issu de l'étape b) de séparation en aval de l'étape d'hydrotraitement et/ou du recyclage du gaz riche en hydrogène issu d'une étape ultérieure du procédé d'hydrotraitement selon l'invention et de préférence d'une étape de séparation en aval de l'étape ultérieure d'hydroisomérisation. En pratique, l'hydrogène d'appoint peut provenir du reformage à la vapeur ou du reformage catalytique, et sa pureté en hydrogène est le plus souvent comprise entre 75 et 99,9 % volume, les autres gaz présents étant généralement le méthane, l'éthane, le propane et le butane. Le gaz riche en hydrogène issu de l'étape b) de séparation en aval de l'étape d'hydrotraitement ou encore issu de l'étape de séparation en aval de l'étape d'hydroisomérisation optionnelle subit de préférence préalablement un ou plusieurs traitements de purification intermédiaire avant d'être recyclé dans le procédé d'hydrotraitement et/ou dans l'étape optionnelle d'hydroisomérisation.

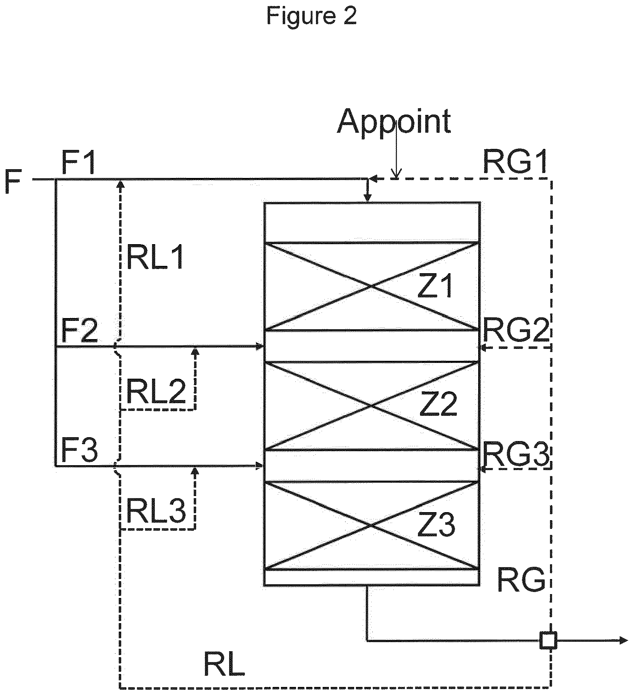

Pour une compréhension plus aisée de la présente invention, les définitions suivantes sont introduites. Elles font référence à la figure 2. Le réacteur d'hydrotraitement du procédé selon l'invention peut contenir un nombre variable n de zones catalytiques.

On entend par zone catalytique un lit catalytique. Chaque zone catalytique peut comprendre une ou plusieurs couches de catalyseurs, identiques ou différentes, éventuellement complétée par des couches inertes. Les zones catalytiques peuvent contenir des catalyseurs identiques ou différents.

Conformément à l'invention, le réacteur comprend un nombre n de zones catalytiques, n étant un entier compris entre 1 et 10, de préférence entre 1 et 6, de manière préférée entre 2 et 5, de manière très préférée entre 2 et 4, et de manière encore plus préférée entre 2 et 3.

Dans un mode de réalisation très préférée, le réacteur comprend 2 zones catalytiques.

Tous les flux sont exprimés en débit massique.

F : flux total de la charge renouvelable traitée dans le procédé
F1 : flux partiel de la charge introduit dans la première zone catalytique Z1
F2 : flux partiel de la charge introduit dans la deuxième zone catalytique Z2
F3 : flux partiel de la charge introduit dans la troisième zone catalytique Z3 et ainsi de suite...

Fn : flux partiel de la charge introduit dans la dernière zone catalytique Zn

RL1 : flux de recycle liquide, recyclée dans la première zone catalytique Z1
RL2 : flux de recycle liquide, recyclée dans la deuxième zone catalytique Z2 et ainsi de suite...
RLn : flux de recycle liquide, recyclée dans la dernière zone catalytique Zn
RG1 : flux gazeux recyclé dans la première zone catalytique Z1, le flux gazeux comprenant majoritairement de l'hydrogène.
RG2 : flux gazeux recyclé dans la deuxième zone catalytique Z2, le flux gazeux comprenant majoritairement de l'hydrogène.
et ainsi de suite...
RGn : flux gazeux recyclé dans la dernière zone catalytique Zn, le flux gazeux comprenant majoritairement de l'hydrogène.

Lorsqu'un appoint de gaz contenant de l'hydrogène est effectué au niveau de n'importe quelle zone catalytique, le débit massique de cet appoint est ajouté au débit massique du flux gazeux recyclé de ladite zone et donc comptabilisé dans RG1, .... RGn.

Dans toute la suite du texte, on entend par taux de recycle local sur chacune des zones catalytiques (TRn), le rapport massique entre la somme des flux de recycle liquides alimentant les zones catalytiques Z1 à Zn-1 et du flux de recycle liquide introduit dans la zone catalytique Zn sur le flux partiel de la charge introduite dans la zone catalytique Zn (Fn).

En effet, la quantité totale de recycle liquide traversant la zone catalytique Zn comprend le recycle liquide introduit dans les zones catalytiques Z1 à Zn-1 (RL1 + RL2 + ...RLn-1) et qui alimente et traverse les zones catalytiques Z1 à Zn-1 puis la zone catalytique Zn ainsi que le recycle liquide introduit dans la zone catalytique Zn (RLn).

Ainsi, on exprime le taux de recycle local sur chacun des lits par la formule suivante :

$$TRn = (RL1 + RL2 + \ldots + RLn\text{-}1 + RLn)/Fn$$

En ce qui concerne la zone catalytique 1, le taux de recycle local sur la zone catalytique 1 est le rapport massique entre le flux du recycle liquide envoyé dans la première zone catalytique Z1 (RL1) et le flux partiel de la charge introduite dans la première zone catalytique 1 (F1) : TR1=RL1/F1

Dans toute la suite du texte, on entend par taux de dilution de la charge sur chacune des zones catalytiques (TDn), le rapport massique entre la quantité des flux liquides et gazeux diluants, arrivant dans la zone catalytique n et le flux partiel de charge introduit dans la zone catalytique Fn.

Pour le calcul du taux de dilution, la dilution de la charge à la fois par les flux liquides et gazeux est prise en compte. La quantité des flux liquides et gazeux, diluants, traversant la zone catalytique n comprend le recycle liquide introduit dans la zone catalytique n-1 (RLn-1) qui traverse le lit n, le recycle gazeux constitué du gaz contenant de l'hydrogène non réagi dans la zone catalytique n-1 (RGn-1), le recycle liquide et gazeux introduit dans la zone catalytique n (RLn + RGn), ainsi que le produit hydrotraité issu de la zone catalytique n-1. On considère que la conversion de la charge dans chaque lit catalytique est de 100%, la quantité de produit hydrotraité issu de la zone catalytique n-1 est donc égale à la quantité de charge introduite dans la zone catalytique n-1 (Fn-1).

Ainsi, on exprime le taux de dilution sur chacune des zones catalytiques est défini selon l'invention par la formule suivante :

$$TDn = ((F1 + … + Fn-1) + (RL1 + … + RLn-1 + RLn) + (RG1 + … + RGn-1 + RGn) / Fn$$

En particulier, pour ce qui concerne la zone catalytique 1, le taux de dilution de la charge sur la zone catalytique 1 est le rapport massique entre le flux du recycle liquide et gazeux diluants, envoyé dans la première zone catalytique Z1 (RL1 + RG1) et le flux partiel de la charge introduite dans la première zone catalytique 1 (F1) :TD1 = (RL1+RG1) / F1.

Conformément à l'étape a) du procédé selon l'invention, le flux de la charge totale F est divisé en un nombre de différents flux partiels F1 à Fn égal au nombre de zones catalytiques n dans le réacteur, le premier flux partiel de charge F1 étant injecté dans la première zone catalytique, le deuxième flux partiel de charge F2 étant injecté dans la deuxième zone catalytique et ainsi de suite, si n est supérieur à 2, ledit procédé d'hydrotraitement opérant à une température comprise entre 180 et 400°C, à une pression comprise entre 0,1 MPa et 15 MPa à une vitesse spatiale horaire comprise entre 0,1 h$^{-1}$ et 10 h$^{-1}$, et avec un ratio entre le débit d'hydrogène et le débit de charge est compris entre 150 et 1500 Nm$^3$/m$^3$, le débit massique d'hydrogène envoyé vers la première zone catalytique représentant plus de 80 % en poids du débit massique total d'hydrogène utilisé dans le procédé d'hydrotraitement, pour produire en sortie de réacteur au moins un effluent contenant des hydrocarbures paraffiniques,

Excepté durant la phase de démarrage du procédé, au moins une partie de ladite fraction liquide contenant des hydrocarbures paraffiniques issue de l'étape b) de séparation est recyclée à la première zone catalytique Z1 et aux zones catalytiques suivantes Zn. Ladite fraction liquide contenant des hydrocarbures paraffiniques joue donc le rôle d'agent diluant liquide pour la charge.

La section hydrotraitement du procédé étant conçue de façon à convertir totalement les charges traitées, le recycle liquide produit est un flux d'hydrocarbures paraffiniques dont la teneur en oxygène est très faible et de préférence inférieure à la limite de détection analytique, et est essentiellement composé de paraffines. En conséquence, ce recycle liquide est inerte vis-à-vis des réactions d'hydrotraitement qui ont lieu dans les différentes zones catalytiques, et joue ainsi pleinement son rôle de diluant liquide de la charge, ce qui permet de limiter l'élévation de température dans la première zone catalytique ainsi que dans les zones catalytiques suivantes, due à l'exothermie des réactions qui s'y produisent.

Durant la phase de démarrage, une large gamme d'hydrocarbures peut être injectée en tant qu'agent diluant liquide, comme par exemple une coupe gazole légère jusqu'à ce qu'assez de produit hydrotraité soit disponible pour être recyclé à la première zone catalytique Z1 et aux zones catalytiques suivantes Zn.

Conformément à l'invention, ledit procédé d'hydrotraitement opère à une température comprise entre 180 et 400°C de préférence à une température comprise entre 200 et 350°C, à une pression comprise entre 0,1 MPa et 15 MPa, de préférence comprise entre 0,5 et 10 MPa, et de manière préférée comprise entre 1 MPa et 10MPa, à une vitesse spatiale horaire comprise entre 0,1 h$^{-1}$ et 10 h$^{-1}$, et avec un ratio entre le débit d'hydrogène total et le débit de charge totale est compris entre 150 et 1500 Nm$^3$/m$^3$.

Comme indiqué précédemment, l'hydrogène est utilisé en excès. Dans le procédé selon l'invention, la quantité d'hydrogène totale utilisé dans ledit procédé est telle que le ratio entre le débit d'hydrogène total et le débit de charge totale est compris entre 150 et 1500 Nm$^3$/m$^3$, de préférence entre 400 et 1200 Nm$^3$/m$^3$, de préférence entre 600 et 900 Nm$^3$/m$^3$.

De préférence, la vitesse spatiale horaire définie comme étant le ratio entre le débit volumique total de charge traitée et le volume total de catalyseur dans la section hydrotraitement est comprise entre 0,1 et 5 h$^{-1}$, et de manière préférée entre 0,1 et 3 h$^{-1}$.

Le procédé d'hydrotraitement selon l'invention peut avantageusement opérer à contrecourant ou à co-courant ascendant ou à co-courant descendant et de préférence à co-courant descendant.

Un critère essentiel de l'invention réside dans le fait que le débit massique d'hydrogène envoyé vers la première zone catalytique représentant plus de 80 % en poids du débit massique total d'hydrogène utilisé dans le procédé d'hydrotraitement, de préférence plus de 90% et de manière préférée, la totalité du débit massique d'hydrogène utilisé dans le procédé d'hydrotraitement est envoyée dans la première zone catalytique Z1.

L'utilisation d'un fort débit de gaz en entrée de la première zone catalytique Z1 permet l'utilisation d'un débit de recycle liquide faible dans toutes les zones catalytiques, et en particulier dans la 1$^{ère}$ zone (les suivantes bénéficiant de la dilution issue de la charge traitée dans les lits supérieurs). En effet, l'utilisation d'un fort débit de gaz en entrée de la première zone catalytique Z1 constitue un volume de gaz réactif qui se réchauffe en absorbant une partir de l'exothermie de la réaction. Un débit de recycle liquide très élevé n'est plus nécessaire pour gérer l'exothermie. Ceci permet d'utiliser des réacteurs d'hydrotraitement de dimensions comparables à celles des réacteurs d'hydrotraitement de coupes pétrolières comme les gazoles (et donc de limiter les coûts), de limiter les pertes de charges et d'éviter des phénomènes d'engorgement du réacteur.

L'utilisation d'une quantité d'hydrogène importante au niveau de la première zone catalytique permet également de faciliter le transfert de l'hydrogène de la phase gaz vers la phase liquide et donc vers le catalyseur. En effet, dans le procédé selon l'invention et en particulier dans la première zone catalytique, l'efficacité globale de la réaction d'hydrodeoxygenation est potentiellement limitée par l'intensité de ce transfert. En effet, le catalyseur n'est pas toujours utilisé de façon optimale dans les premières phases de la réaction d'hydrodéoxygénation du fait de la difficulté à alimenter le catalyseur en hydrogène. Le transfert du gaz vers le liquide reste important, mais pas toujours suffisant pour correspondre à la demande d'hydrogène pour convertir la charge. L'augmentation du débit d'hydrogène dans la première zone catalytique va dans le sens d'une augmentation du transfert gaz-liquide, et donc d'un meilleur apport de l'hydrogène vers le catalyseur. Celui-ci est donc utilisé de manière optimale, l'efficacité globale du réacteur étant moins limitée par l'intensité du transfert gaz-liquide. A iso-conversion de la charge, la quantité de catalyseur à mettre dans le réacteur, et en particulier dans la première zone catalytique, est donc optimisée. Dans le cas où plus de 80 % poids du débit massique total d'hydrogène utilisé dans le procédé d'hydrotraitement est envoyé vers la première zone catalytique, un ou plusieurs flux d'hydrogène peuvent avantageusement être injectés entre les zones catalytiques suivants la première zone.

Par ailleurs, il a été découvert qu'il était avantageux d'injecter la charge dans les différentes zones catalytiques (débit massique F1 injecté dans la zone Z1, F2 dans la zone Z2, etc...) en faisant en sorte que des proportions croissantes de charge soient injectées dans les zones catalytiques successives. Ceci se traduit par la relation suivante :

$F(n-1)/F$ inférieur ou égal à $Fn/F$, pour le cas général où n est le nombre de zones catalytiques mises en jeu.

Ainsi, de préférence, les différents flux partiels de charge sont injectés dans les zones catalytiques successives dans des proportions croissantes de telle manière que $F1/F$ soit inférieur ou égal à $F2/F$, lui-même inférieur ou égale à $F3/F$ et ainsi de suite jusqu'à $F(n-1)/F$ soit inférieur ou égal à $Fn/F$,

L'avantage apporté par une telle distribution de la charge dans les différentes zones catalytiques successives, réside dans le fait que les températures de sortie des différentes zones suivent un profil montant, ce qui permet d'ajuster la différence de température entre la température de sortie et d'entrée de chaque zone catalytique pour qu'elle soit comparable pour chaque zone catalytique.

Les flux partiels de charge injectés en entrée des zones catalytiques situées en aval de la première zone catalytique Z1 peuvent avantageusement être strictement identiques au flux de charge injecté en entrée de zone Z1, mais aussi être une charge d'origine renouvelable mais de nature différente.

Ainsi, la charge totale est distribuée en différents flux F1, F2,..., Fn alimentant les différentes zones catalytiques successives. Un appoint de gaz riche en hydrogène peut éventuellement être injecté en amont de la première zone catalytique Z1 ainsi qu'entre les zones catalytiques Zn et Zn+1 suivant la première. Le flux de charge F1 éventuellement additionné d'un appoint de gaz contenant de l'hydrogène est mélangé à un flux de recycle liquide et gazeux (RL1 et RG1) de préférence, avant que ledit flux de charge F1 ne soit envoyé dans la première zone catalytique Z1, ou directement dans la première zone catalytique Z1. De même, le flux de charge (F2) éventuellement additionné d'un appoint de gaz contenant de l'hydrogène est mélangé à un flux de recycle liquide RL2 et éventuellement gazeux RG2 dans le cas où 100% du débit massique d'hydrogène utilisé dans le procédé d'hydrotraitement n'est pas envoyé dans la première zone catalytique Z1 et ainsi de suite jusqu'à la n-ième zone catalytique.

De la même manière, les flux partiels de charge injectés dans les zones catalytiques en aval de la première zone F2 à Fn, éventuellement additionnés d'un appoint de gaz contenant de l'hydrogène, et mélangés aux flux de recycle liquides correspondants RL2 à RLn et éventuellement aux flux de recycle gazeux RG2 à RGn, sont mélangés avec les composés issus des zones catalytiques précédentes, de préférence dans des zones de mélanges, entre lesdites zones catalytiques. Lesdits flux partiels de charge peuvent également éventuellement être directement envoyés dans les zones de mélanges entre les zones catalytiques avant leur mélange.

Les flux entrant dans la seconde zone catalytique sont donc :

- la charge injectée en entrée de zone Z2 (F2), telle que le rapport massique $F2/F$ soit supérieur ou égal au rapport massique $F1/F$,

- le recycle liquide injecté en entrée de zone Z2 (RL2), composé quasi-exclusivement d'hydrocarbures paraffiniques,

- le recycle gazeux injecté en entrée de zone Z2 (RG2), composé majoritairement de l'hydrogène, y compris un éventuel appoint de gaz contenant de l'hydrogène également comptabilisé dans RG2,

- les flux issus de la zone catalytique liquides et gazeux issus de la zone catalytique 1 : (RL1+RG1+F1 en débit massique) :

- RL1 étant le recycle liquide injecté en entrée de zone Z1, composé quasi-exclusivement d'hydrocarbures paraffiniques et ayant traversé la zone Z1,

- RG1 étant le recycle gazeux injecté en entrée de zone Z1, composé majoritairement de l'hydrogène n'ayant pas réagi dans la zone Z1,

- F1 correspondant à l'effluent hydrotraité formé par la conversion de la charge dans la zone Z1, considérant que les conditions opératoires appliquées permettent d'obtenir 100% de conversion de la charge dans chaque zone catalytique. Les hydrocarbures liquides présents dans cet effluent sont exempts d'oxygène et quasi-exclusivement des hydrocarbures paraffiniques.

Avant introduction dans le procédé d'hydrotraitement, la température des flux partiels de charge F1, F2,..., Fn est avantageusement inférieure à 150°C. Elle doit être suffisante pour permettre un abaissement de viscosité suffisant et donc un transfert adéquat des bacs de stockage jusqu'à la section réactionnelle de l'hydrotraitement. Il n'est ni utile ni souhaitable de porter la température de la charge à des valeurs supérieures en l'absence d'hydrogène, de façon à éviter toute dégradation des charges par suite de polymérisation et par suite de cokage par exemple et à maitriser la température d'entrée des zones catalytiques suivants la première.

De la même façon, la température du recycle gazeux RG1 à RGn injecté, éventuellement en mélange avec de l'hydrogène d'appoint en entrée des zones catalytiques Z1 à Zn composé majoritairement de l'hydrogène, qui est mélangé aux flux partiels de charge, est la plus basse possible compatible avec l'opération du procédé, puisqu'il est avantageux pour le procédé de mélanger la charge à de l'hydrogène à basse température, de façon à abaisser la température par effet de quench appliqué aux produits hydrocarbures sortant des différentes zones catalytiques.

La température du flux total (liquide + gazeux) injecté à l'entrée de la zone catalytique Z1 (charge + recycle liquide + recycle gazeux + éventuellement H2 d'appoint) doit être soigneusement réglée.

Cependant, les réactions d'hydrodéoxygenation et/ou décarboxylation ayant lieu dans les zones catalytiques étant exothermiques, la température augmente au fur et à mesure que la charge se transforme dans les différentes zones catalytiques.

De préférence, la température en entrée de la première zone catalytique Z1 est supérieure à 180°C, de manière préférée supérieure à 200°C, et la température à la sortie de ladite première zone est de préférence inférieure à 350°C, de manière préférée inférieure à 320°C, et de manière préférée inférieure à 300°C.

La température à l'entrée de chacune des zones catalytiques suivant la première doit également être contrôlée de manière à ce que la température du mélange en sortie d'une zone catalytique précédente ne soit pas trop élevée de manière à éviter les réactions secondaires telles que la polymérisation, le craquage et la désactivation du catalyseur.

Les températures à l'entrée des zones catalytiques suivants la première peuvent avantageusement être supérieures à celle en entrée de la zone précédente, généralement inférieure à 300°C et de manière préférée inférieure à 280°C.

La température à la sortie d'au moins une zone catalytique suivants la première est de préférence supérieure à 260°C, de préférence supérieure à 280°C. Les températures à la sortie de chacune des zones catalytiques suivants la première sont de préférence inférieures à 400°C, et de manière encore préférée inférieure à 380°C, et de manière plus préférée inférieure à 350°C.

Généralement, une différence de température entre la température de sortie et d'entrée de chaque zone catalytique comprise entre 1 et 80°C, de préférence entre 20 et 78°C, de manière préférée entre 25 et 75°C est maintenue.

Les flux partiels de charge F2 à Fn, additionné des recycles liquides RL2 à RLn et des recycles gaz RG2 à RGn, injectés dans les zones catalytiques situées en aval de la première zone catalytique Z1, dans lesquelles ils se mélangent avec l'effluent hydrotraité provenant de la zone n-1, permettent un abaissement de la température du produit hydrotraité formé et donc un contrôle de la température en entrée de la zone catalytique suivante. Les mêmes familles de réactions se produisent dans la zone Zn et la zone Zn-1, avec une cinétique un peu plus rapide dans la zone Zn-1 en raison d'une température moyenne supérieure.

Selon une variante préférée, des vannes de régulation des flux partiels de charge, de recycle liquide et de gaz contenant de l'hydrogène peuvent être contrôlées par les valeurs de température à l'entrée de la première zone catalytique et de différence de température de sortie et d'entrée de chaque zone catalytique de manière à ajuster les flux partiels de charge et d'hydrogène ainsi que le flux du recycle liquide pendant le fonctionnement. De même, le contrôle de la température peut être réalisé en variant la température de la charge et/ou de l'hydrogène injecté et/ou du recycle liquide et gazeux. De cette manière la température désirée à l'entrée des zones catalytiques et/ou le delta de température dans les zones catalytiques est maintenue et de préférence le profil de température montant dans les zones catalytiques est ajusté.

Conformément à l'invention, au moins une partie de ladite fraction liquide contenant les hydrocarbures paraffiniques est recyclée à la première zone catalytique et aux zones catalytiques suivantes de sorte que

- le taux de recycle local sur chacun des lits c'est-à-dire le rapport massique entre le flux de ladite fraction liquide recyclée et le flux partiel de charge introduit dans la zone catalytique Fn soit inférieur ou égal à 2, de préférence inférieur ou égal à 1,7, de manière préférée inférieur ou égal à 1,5.

Il est connu que l'utilisation d'un taux de recycle liquide important permet une meilleure gestion de l'exothermie et en particulier un maintien de la différence de température entre la température de sortie et d'entrée de chaque zone catalytique dans une gamme acceptable pour l'exploitation industrielle du procédé. De façon surprenante, malgré la mise en oeuvre d'un taux de recycle liquide faible la présente invention permet une gestion optimisée de l'exothermie au sein des différentes zones catalytiques grâce à la combinaison dudit taux de recycle faible et d'un fort débit d'hydrogène à l'entrée du premier lit.

Par ailleurs, l'utilisation d'un recycle liquide faible facilite les revamping d'unités existantes. On entend par « revamping » selon la terminologie anglo-saxonne la révision de la conception d'un équipement déjà en fonctionnement pour en accroître la production, les performances techniques, économiques et environnementales ainsi que la fiabilité.

De préférence, le taux de dilution local sur chacun des lits c'est-à-dire le rapport massique entre la quantité des flux liquides et gazeux introduits dans la zone catalytique n et le flux partiel de charge introduit dans la zone catalytique Fn soit inférieur à 4, de préférence inférieur à 3,8, de manière préférée inférieur à 3,5, de manière très préférée inférieur à 3, de manière plus préférée inférieur à 2,5 et de manière encore plus préférée inférieur à 2.

Conformément à l'invention, chaque zone catalytique comprend au moins un catalyseur d'hydrotraitement.

Le type de catalyseurs d'hydrotraitement utilisés dans le procédé selon l'invention est bien connu dans l'art antérieur et peuvent être une association des catalyseurs décrits dans ce qui suit. Un seul catalyseur ou plusieurs catalyseurs identiques ou différents peuvent avantageusement être utilisés dans les zones catalytiques. Du solide inerte peut également être ajouté en tète et/ou en fond de lit catalytique pour assurer une bonne hydrodynamique dans le lit catalytique.

Le catalyseur d'hydrotraitement est avantageusement catalyseur d'hydrotraitement comprenant une fonction hydro-déshydrogénante comprenant au moins un métal du groupe VIII de préférence choisis parmi le nickel et le cobalt, pris seul ou en mélange, de préférence en association avec au moins un métal du groupe VIB de préférence choisi parmi le molybdène et le tungstène, pris seul ou en mélange et un support choisi dans le groupe formé par l'alumine, la silice, les silices-alumines, la magnésie, les argiles et les mélanges d'au moins deux de ces minéraux. Ce support peut également avantageusement renfermer d'autres composés et par exemple des oxydes choisis dans le groupe formé par l'oxyde de bore, la zircone, l'oxyde de titane, l'anhydride phosphorique. Le support préféré est un support d'alumine.

De façon préférée on utilise un catalyseur de type NiMo sur un support alumine.

La teneur en oxydes de métaux des groupes VIII et de préférence en oxyde de nickel est avantageusement comprise entre 0,5 et 10 % en poids d'oxyde de nickel (NiO) et de préférence entre 1 et 5 % en poids d'oxyde de nickel et la teneur en oxydes de métaux des groupes VIB et de préférence en trioxyde de molybdène est avantageusement comprise entre 1 et 30 % en poids d'oxyde de molybdène ($MoO_3$), de préférence de 5 à 25 % en poids, les pourcentages étant exprimés en % poids par rapport à la masse totale du catalyseur.

Ledit catalyseur peut également avantageusement contenir un élément dopant choisi parmi le phosphore et le bore, pris seuls ou en mélange à une teneur en poids d'oxyde dudit élément dopant avantageusement inférieure à 20 % et de manière préférée inférieure à 10 % et avantageusement d'au moins 0.001 % par rapport à la masse totale du catalyseur.

S'agissant de catalyseurs actifs sous forme sulfures, et les charges traitées ayant en général des teneurs en soufre limitées (moins de 100 ppm poids généralement, et le plus souvent moins de 50 ppm poids), il convient généralement d'additionner à l'ensemble des flux de charge, un composé soufré connus de l'Homme du métier. Ce dispositif permet de conserver sous leur forme sulfure les catalyseurs d'hydrotraitement utilisés dans le présent procédé, et ainsi de maintenir une activité catalytique suffisante tout au long du cycle.

Le volume de catalyseur et la formulation du ou des catalyseurs utilisés dans les zones catalytiques du procédé selon l'invention sont adaptés de façon à ce que la conversion de la charge c'est à dire le taux d'élimination de l'oxygène soit quasi complète et de préférence complète en sortie de la première zone Z1 et de préférence dans les zones catalytiques suivantes.

On ne sortirait pas du cadre de la présente invention en utilisant dans l'étape d'hydrotraitement du procédé selon l'invention, de manière simultanée ou de manière successive, un seul catalyseur ou plusieurs catalyseurs différents dans les zones catalytiques.

Le procédé selon l'invention utilise des réacteurs en lit fixe à écoulement ruisselant connus de l'homme du métier. Les réactifs (charge et hydrogène) sont introduits dans le réacteur suivant un écoulement descendant en co-courant du haut vers le bas du réacteur. De tels réacteurs sont par exemple décrits dans le document US 7 070 745.

Entre chaque zone catalytique, il est possible d'injecter de l'hydrogène supplémentaire d'appoint et/ou de recycle du gaz riche en hydrogène issu de l'étape b) de séparation, afin de profiter d'un effet de trempe (quench selon le terme anglo-saxon) et d'atteindre les températures souhaitées en entrée de la zone catalytique suivante. Ainsi, des boîtes de quench peuvent avantageusement être installées entre chaque zone catalytique, afin d'assurer une meilleure homogénéité des deltas de températures sur toute la section du réacteur, et pour l'ensemble des zones catalytiques.

De la même manière, des distributeurs sont possiblement installés de préférence sous les dispositifs de quench entre chaque zone catalytique, afin de garantir une alimentation homogène en charge liquide et gaz, sur toute la section du réacteur, et pour l'ensemble des zones catalytiques.

Toutefois, selon une variante préférée dans laquelle 100% du recycle gazeux riche en hydrogène est injecté en tête du réacteur, on injecte uniquement du liquide dans les zones inter-lits catalytiques, ce qui simplifie considérablement le design de ces zones.

Un avantage du procédé selon l'invention consiste dans sa grande flexibilité, selon l'origine de la charge. Des charges différant notablement entre elles, en particulier de par leurs différents degrés d'insaturation des chaines hydrocarbonées, peuvent être converties totalement aussi bien en ce qui concerne l'élimination de l'oxygène (ce qui amène une efficacité maximale de dilution de la charge dans la zone suivante) qu'en ce qui concerne l'élimination de l'azote (qui permet un bien meilleur fonctionnement de l'étape éventuelle d'hydroisomérisation en aval).

Optionnellement, les charges issues de sources renouvelables peuvent également être traitées dans le procédé selon l'invention en mélange avec des coupes pétrolières telles que les gazoles, les kérosènes, voire les essences issus des procédés de raffinage pétrolier. De préférence les coupes pétrolières sont des charges pétrolières de type distillats moyens choisies dans le groupe formé par les gazoles et/ou les kérosènes de distillation atmosphérique directe et les gazoles et/ou les kérosènes issus de procédés de conversion, ou l'un quelconque de leur mélange.

De préférence, les coupes pétrolières sont choisies dans le groupe formé par les gazoles atmosphériques de distillation directe, les gazoles issus de procédés de conversion tels que par exemple ceux provenant du coker, d'une hydroconversion en lit fixe (tels que ceux issus des procédés HYVAHL® de traitement des lourds mis au point par la demanderesse), d'une unité de craquage catalytique (coupe LCO venant du FCC) ou des procédés d'hydrotraitement des lourds en lit bouillonnant (tels que ceux issus des procédés H-OIL®), ou encore les huiles désasphaltées au solvant (par exemple au propane, au butane, ou au pentane) venant du désasphaltage de résidu sous vide de distillation directe, ou de résidus issus des procédés de conversion des charges lourdes tels que par exemple HYVAHL® et H-OIL®. Les charges peuvent aussi avantageusement être formées par mélange de ces diverses fractions. Elles peuvent également avantageusement contenir des coupes gazoles légers ou kérosènes avec un profil de distillation d'environ 100°C à environ 370°C. Elles peuvent aussi avantageusement contenir des extraits aromatiques et des paraffines obtenus dans le cadre de la fabrication d'huiles lubrifiantes.

Dans ce cas de figure, la quantité de recycle liquide envoyé à la première zone catalytique de la section hydrotraitement, peut être grandement réduite voire supprimée, puisque ces flux de charges pétrolières conduisent lors de leur traitement à l'hydrogène, à des dégagements de chaleur plus limités que lors du traitement de charges d'origine renouvelable comportant des quantités notables d'oxygène.

**Séparation**

Conformément à l'invention, l'effluent contenant des hydrocarbures paraffiniques issu de l'étape a) est soumis à au moins une étape b) de séparation permettant de séparer au moins une fraction gazeuse et au moins une fraction liquide contenant les hydrocarbures paraffiniques.

Ladite étape de séparation permet avantageusement de séparer également au moins une fraction liquide contenant de l'eau.

Ladite fraction gazeuse séparée à l'issue de l'étape b) et comprenant l'hydrogène est recyclée dans l'étape a). Ladite fraction gazeuse comprend également avantageusement le CO, le $CO_2$, l'$H_2S$, les gaz légers, et éventuellement de l'eau.

Selon une variante, la séparation peut être effectuée en au moins deux étapes et de préférence dans un séparateur haute température haute pression (HTHP) permettant de séparer une fraction gazeuse comprenant l'hydrogène, le CO, le $CO_2$, l'$H_2S$, les gaz légers et une grande partie de l'eau formée lors des réactions d'hydrodésoxygénation et une fraction liquide contenant les hydrocarbures paraffiniques, la fraction gazeuse étant ensuite envoyée dans séparateur basse température haute pression de manière à séparer une fraction gazeuse comprenant l'hydrogène, le CO, le $CO_2$, l'$H_2S$, les gaz légers et une grande partie de l'eau formée lors des réactions d'hydrodésoxygénation et une fraction liquide contenant les hydrocarbures paraffiniques.

Le séparateur haute température haute pression (HTHP) opère de préférence sans réduction notable de pression par rapport à la pression dans le réacteur d'hydrotraitement, c'est-à-dire à une pression telle que la pression de la séparation n'est pas inférieure à la pression dans l'étape d'hydrotraitement moins 1 MPa, et à une température entre 145°C et 360°C et de préférence entre 150 et 300°C. Ladite séparation haute température haute pression (HTHP) permet de séparer une fraction gazeuse comprenant l'hydrogène, le CO, le $CO_2$, l'$H_2$S, les gaz légers et une grande partie de l'eau formée lors des réactions d'hydrodésoxygénation et une fraction liquide contenant les hydrocarbures paraffiniques.

Dans le cas où l'étape b) de séparation est réalisée en au moins deux étapes, une étape de séparation de l'eau est avantageusement mise en oeuvre en aval de ladite étape b), de manière à séparer une fraction gazeuse comprenant l'hydrogène, le CO, le $CO_2$, l'$H_2$S, les gaz légers, une fraction liquide comprenant l'eau et une fraction liquide comprenant les hydrocarbures paraffiniques. Ladite étape de séparation de l'eau est avantageusement réalisée selon les méthodes connues de l'homme du métier et de préférence dans un séparateur basse température haute pression. La séparation de l'eau dans un séparateur basse température haute pression peut éventuellement être suivie d'une étape de séparation dans un séparateur basse température basse pression.

Ladite fraction gazeuse comprenant l'hydrogène peut ensuite avantageusement être recyclée dans l'étape a).

Selon une autre variante, l'étape b) de séparation est réalisée en deux étapes, la première séparation étant effectuée dans un séparateur basse température haute pression (LTHP) de préférence sans réduction notable de pression par rapport à la pression dans le réacteur d'hydrotraitement, c'est-à-dire à une pression telle que la pression de la séparation n'est pas inférieure à la pression dans l'étape d'hydrotraitement moins 1 MPa, ladite première étape opérant à une température comprise entre 25°C et 200°C, de préférence entre 50 et 150°C et à une pression comprise entre 0,1 et 15 MPa et de préférence entre 2 et 10 MPa, la deuxième séparation étant effectuée dans un séparateur basse température basse pression (LTLP) à une température comprise entre 25°C et 200°C et de préférence entre 50 et 150°C et à une pression comprise entre 0,1 et 8 MPa et de préférence entre 0,5 et 5MPa. La première étape de séparation (LTHP) permet de séparer une fraction gazeuse comprenant l'hydrogène, le CO, le $CO_2$, l'$H_2$S, et les gaz légers débarrassée de l'eau, une fraction liquide comprenant l'eau et une fraction liquide contenant les hydrocarbures paraffiniques.

Ladite fraction gazeuse comprenant l'hydrogène peut ensuite avantageusement être recyclée dans l'étape a).

Le but de cette étape est de séparer l'eau de l'effluent hydrocarboné liquide. On entend par élimination de l'eau, l'élimination de l'eau produite par les réactions d'hydrodésoxygénation (HDO) et/ou injectée dans la section réactionnelle. L'élimination plus ou moins complète de l'eau est avantageusement fonction de la tolérance à l'eau du catalyseur d'hydroisomérisation utilisé dans l'étape optionnelle suivante du procédé selon l'invention. L'élimination de l'eau peut être réalisée par toutes les méthodes et techniques connues de l'homme du métier, telles que par exemple par séchage, passage sur un dessicant, flash, extraction par solvant, distillation et décantation ou par association d'au moins deux de ces méthodes.

Le gaz contenant l'hydrogène qui a été séparé lors de l'étape b) de séparation selon l'invention et/ou de l'étape optionnelle d'hydroisomérisation, est, si nécessaire, avantageusement au moins en partie séparé pour réduire sa teneur en légers (C1 à C4). De même, il subit avantageusement un ou plusieurs traitements de purification intermédiaire, de préférence au moins un lavage avec au moins une amine visant à évacuer le CO2, suivi de préférence d'une méthanation et/ou d'une séparation par adsorption modulée en pression (en anglais Pressure Swing Adsorption ou (PSA)), avant d'être recyclé.

On peut avantageusement introduire l'hydrogène de recycle, de préférence purifié, soit avec la charge entrant dans le procédé selon l'invention et/ou dans l'étape d'hydroisomérisation optionnelle, soit sous forme d'hydrogène de trempe entre les lits de catalyseurs d'hydrodésoxygénation selon l'invention et/ou d'hydroisomérisation.

De façon optionnelle, une étape de purification finale des différents polluants peut être mise en oeuvre par des méthodes connues de l'homme du métier telles que par exemple par strippage à la vapeur ou à l'azote ou par coalescence et/ou masse de captation ou séchage sous vide.

Conformément à l'invention, au moins une partie de ladite fraction liquide contenant les hydrocarbures paraffiniques est recyclée à la première zone catalytique et aux zones catalytiques suivantes avec les taux de recycle et de dilution tels que décrits ci-dessus, en mélange avec les flux partiels de charge correspondants.

La partie de l'effluent liquide qui n'est pas recyclée pour être additionnée au flux partiels de charge injectée F1 à Fn comme recycle liquide peut avantageusement être envoyée soit directement au pool carburant pour être incorporée au pool gazole, soit directement dans une étape optionnelle d'hydroisomérisation (HIS), afin de produire des bases kérosènes et/ou gazoles ayant des propriétés à froid améliorées.

**Hydroisomérisation**

Selon un mode de réalisation préféré, une partie au moins de la fraction liquide contenant les hydrocarbures paraffiniques obtenus à l'issue de l'étape b) de séparation est hydroisomérisée en présence d'un catalyseur d'hydroisomérisation.

Ainsi, l'étape optionnelle d'hydroisomérisation du procédé selon l'invention opère avantageusement à une température comprise entre 150°C et 500°C, de préférence entre 150°C et 450°C, et de manière très préférée, entre 200°C et 450°C, de manière plus préférée entre 250°C et 400°C à une pression comprise entre 1 MPa et 10 MPa, de préférence entre 2 MPa et 9 MPa et de manière très préférée, entre 3 MPa et 7 MPa, à une vitesse volumique horaire avantageusement comprise entre 0,1 h-1 et 10 h-1, de préférence entre 0,2 et 7 h-1 et de manière très préférée entre 0,5 et 5 h-1, à un débit d'hydrogène tel que le rapport volumique hydrogène/hydrocarbures est avantageusement compris entre 70 et 1000 Nm$^3$/m$^3$ de charge, de préférence entre 100 et 1000 Nm$^3$ d'hydrogène par m$^3$ de charge et de manière très préférée entre 150 et 1000 Nm$^3$ d'hydrogène par m$^3$ de charge.

Ladite étape d'hydroisomérisation peut opérer à contrecourant ou à co-courant et de préférence à co-courant.

Les catalyseurs d'hydroisomérisation utilisés sont avantageusement de type bifonctionnels, c'est-à-dire qu'ils possèdent une fonction hydro/déshydrogénante et une fonction hydroisomérisante et comprend avantageusement au moins un métal du groupe VIII choisi parmi le platine et le palladium actifs sous leur forme réduite et le nickel et le cobalt utilisés de préférence sous leur forme sulfurée et/ou au moins un métal du groupe VIB choisi parmi le molybdène ou le tungstène en tant que fonction hydrodéshydrogénante et au moins un tamis moléculaire ou un support minéral amorphe en tant que fonction hydroisomérisante.

Dans le cas où le catalyseur d'hydroisomérisation comprend au moins un métal noble du groupe VIII, la teneur totale en métal noble du catalyseur d'hydroisomérisation est avantageusement comprise entre 0,01 et 5% en poids par rapport au catalyseur fini, de manière préférée entre 0,02 et 4% en poids et de manière très préférée entre 0,005 et 2% en poids.

Dans le cas où le catalyseur d'hydroisomérisation comprend au moins un métal du groupe VIB en combinaison avec au moins un métal non noble du groupe VIII, la teneur en métal du groupe VIB du catalyseur d'hydroisomérisation est avantageusement comprise, en équivalent oxyde, entre 5 et 40 % en poids par rapport au catalyseur fini, de manière préférée entre 10 et 35 % en poids et de manière très préférée entre 15 et 30 % en poids et la teneur en métal du groupe VIII dudit catalyseur est avantageusement comprise, en équivalent oxyde, entre 0,5 et 10 % en poids par rapport au catalyseur fini, de manière préférée entre 1 et 8 % en poids et de manière très préférée entre 1,5 et 6% en poids. De préférence, le catalyseur d'hydroisomérisation comprend du NiW.

Selon un mode de réalisation préféré, ledit catalyseur d'hydroisomérisation comprend au moins un support minéral amorphe en tant que fonction hydroisomérisante, ledit support minéral amorphe étant choisi parmi les alumines dopées au fluor et/ou chlore, les silice-alumines et les alumines silicées et de manière préférée les silice-alumines. De manière très préférée, le catalyseur comprend du NiW sur silice-alumine.

Selon un autre mode de réalisation préféré, ledit catalyseur d'hydroisomérisation comprend au moins un tamis moléculaire, de préférence au moins un tamis moléculaire zéolithique et de manière plus préférée, au moins un tamis moléculaire zéolithique 10 MR monodimensionnel en tant que fonction hydroisomérisante.

Les tamis moléculaires zéolithiques sont définis dans la classification "Atlas of Zeolite Structure Types", W. M Meier, D. H. Oison and Ch. Baerlocher, 5th revised édition, 2001, Elsevier auquel se réfère également la présente demande et sont choisis parmi es tamis moléculaires zéolithiques de type structural TON, tel que la NU-10, FER, tel que la ferrierite, EUO, choisis parmi la EU-1 et la ZSM-50, prises seules ou en mélange, ou les tamis moléculaires zéolithiques ZSM-48, ZBM-30, IZM-1, COK-7, EU-2 et EU-11, pris seul ou en mélange.

De préférence, ledit catalyseur d'hydroisomérisation comprend également un liant constitué d'une matrice minérale poreuse. Ledit liant peut avantageusement être utilisé durant l'étape de mise en forme dudit catalyseur d'hydroisomérisation.

## Fractionnement

L'effluent hydroisomérisé est ensuite avantageusement soumis au moins en partie, et de préférence en totalité, à une ou plusieurs séparations.

La ou les étape de séparation de l'effluent issu de l'étape d'hydroisomérisation est(sont) avantageusement réalisée(s) de la même manière que l'étape b) de séparation de l'effluent hydrotraité, avec les mêmes modes de réalisation. La ou les étapes de séparation permet(tent) de séparer au moins une fraction gazeuse, au moins une fraction liquide comprenant de l'eau et au moins une fraction comprenant les hydrocarbures.

La fraction comprenant les hydrocarbures peut ensuite avantageusement subir une étape de fractionnement qui comprend avantageusement une séparation flash permettant de séparer les gaz du liquide et/ou une colonne de stripping ou une distillation atmosphérique. De préférence l'étape du fractionnement comprend une distillation atmosphérique. Le but de cette étape est de séparer les gaz du liquide, et notamment, de récupérer les gaz riches en hydrogène pouvant contenir également des légers tels que la coupe C1 - C4, une coupe essence (150 °C-), et au moins une coupe distillats moyens (150°C+) contenant du kérosène et/ou du gazole.

La valorisation de la coupe essence (ou naphta) n'est pas l'objet de la présente invention, mais cette coupe peut avantageusement être envoyée dans une unité de vapocraquage pour la production d'oléfines et d'hydrogène associé ou de vaporeformage pour la production d'hydrogène, ou de reformage catalytique pour la production d'essence. L'hydrogène ainsi produit peut être injecté dans l'étape a) d'hydrotraitement et/ou d'hydroisomérisation optionnelle.

La coupe distillats moyens qui représente les bases carburants recherchées peut comprendre une coupe contenant le gazole et le kérosène ou les deux coupes peuvent être récupérés séparément. Ces produits sont à base de sources renouvelables et ne contiennent pas de composés soufrés.

Une partie au moins de la ou des coupes distillats moyens peut être recyclée dans l'étape d'hydrotraitement comme recycle.

Selon une variante, au moins une partie de la fraction 150°C+ peut être recyclée dans l'étape d'hydroisomérisation. Ainsi, cette fraction est resoumise à l'isomérisation ce qui permet d'améliorer les propriétés à froid.

Selon une autre variante, au moins une partie de la fraction 300°C+ peut être recyclée dans l'étape d'hydroisomérisation. Ainsi, cette fraction est resoumise à l'isomérisation ce qui permet de valoriser cette coupe en produits plus légers et d'améliorer les propriétés à froid.

Selon une autre variante, une partie au moins de la fraction 150°C+ peut être recyclée dans l'étape d'hydrotraitement.

### Description des figures

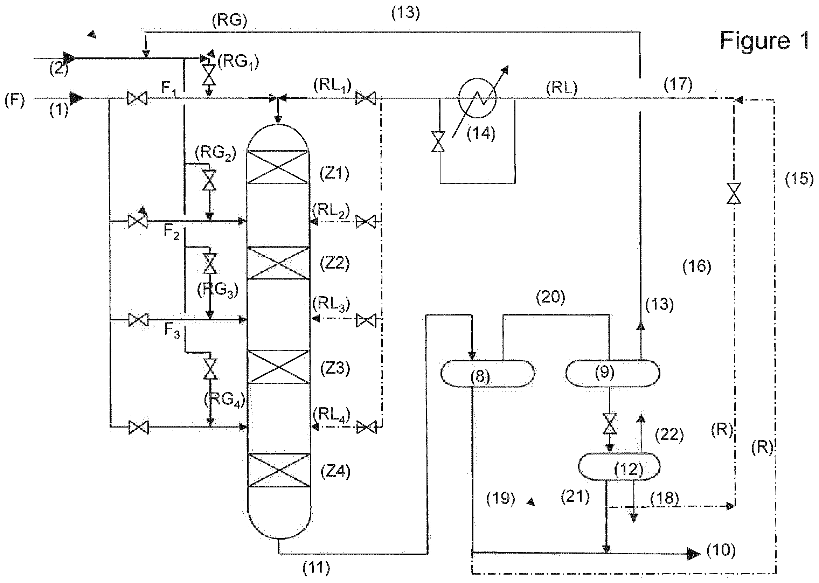

La figure 1 représente un schéma général d'un procédé selon l'invention comprenant n zones catalytiques.

La charge brute encore appelée la charge fraîche F, est injectée dans la ligne (1) représentée sur la figure 1. La charge est distribuée en différents flux F1, F2,..., Fn alimentant les différentes zones catalytiques successives. Le recycle gazeux (RG) est mélangée avec un gaz riche en hydrogène (2). Le flux (RG) (conduite 13) se subdivise en différents flux RG1, RG2 ..RGn. Le flux (17) de recycle liquide se sub-divise en plusieurs flux RL1 à RLn. Le flux de charge F1 est mélangé à un flux de recycle liquide et gazeux (RL1 et RG1) via les conduites (15), (16) et (17) avant que ledit flux de charge F1 ne soit envoyé dans la première zone catalytique Z1. Ainsi, de même, le flux de charge (F2) est mélangé à un flux de recycle liquide RL2 et éventuellement gazeux RG2 dans le cas où 100% du débit massique d'hydrogène utilisé dans le procédé d'hydrotraitement n'est pas envoyé dans la première zone catalytique Z1 et ainsi de suite jusqu'à la n-ième zone catalytique.

L'effluent hydrotraité est soutiré via la conduite (11) et envoyé dans un premier séparateur (8) permettant de séparer un flux gazeux (20) et un flux liquide paraffinique (19), le flux gazeux étant envoyé dans un deuxième séparateur (9) de manière à séparer un flux gazeux (RG) qui est recyclé via la conduite (13) et un flux liquide qui est envoyé vers une dernière étape de séparation (12). Le séparateur (12) permet de séparer l'eau (18) et un second flux liquide paraffinique (21) et un flux gazeux (22) dont une partie (R) est recyclé via la conduite (16) avant d'être sub-divisé et envoyé dans les différentes zones catalytiques du réacteur. L'autre partie du flux liquide (21) et collecté et mélangé dans la conduite (10) au flux liquide (19) issu de la séparation (8) pour être envoyé dans l'étape d'hydrosiomérisation (non représentée sur la figure 1), ou recyclé.

La figure 2 représente les flux entrant et sortant du réacteur d'hydrotraitement. La charge fraiche F est divisée en différents flux F1, F2 et F3 et envoyée dans respectivement dans les zones Z1, Z2 et Z3. Le flux de charge F1 entre dans le lit catalytique Z1 en mélange avec un recycle gazeux RG1, un appoint d'hydrogène et un recycle liquide RL1. Et ainsi de suite pour chacune des zones Z2 et Z3.

### Exemples

### EXEMPLE 1 (NON CONFORME A L'INVENTION)

L'exemple 1 est non conforme à l'invention en ce que le débit massique d'hydrogène envoyé vers la première zone catalytique Z1 représente 35%poids du débit massique total d'hydrogène utilisé dans le procédé d'hydrotraitement.

La charge à traiter est une huile de palme, dont les principales caractéristiques se trouvent dans le tableau 1 a. Cette charge a subi préalablement un traitement à l'acide phosphorique et un traitement aux terres décolorantes selon les protocoles connus de l'homme de l'art.

Tableau 1a

| Caractéristiques de la charge traitée (huile de palme) | |
|---|---|
| Charge traitée | Huile de palme |
| Densité à 15°C (kg/m$^3$) | 915.5 |
| Oxygène (% poids) | 11.34 |
| Hydrogène (% poids) | 12.0 |
| Soufre (ppm poids) | 1.7 |
| Azote (ppm poids) | 1.5 |

(suite)

| Caractéristiques de la charge traitée (huile de palme) | |
|---|---|
| Charge traitée | Huile de palme |
| Phosphore (ppm poids) | < 0.5 |
| Magnésium (ppm poids) | < 0.5 |
| Sodium (ppm poids) | < 0.5 |
| Fer (ppm pds) | < 0.5 |

On souhaite traiter 100 g/h de cette charge dans un réacteur d'hydrotraitement constitué de 2 lits catalytiques.

Chaque zone catalytique est constituée d'un lit de catalyseur. Le catalyseur utilisé est identique dans les deux zones catalytiques de l'étape d'hydrotraitement et comprend 4% poids de NiO, 21% poids de $MoO_3$ et 5% poids de $P_2O_5$ supporté sur une alumine gamma. Ledit catalyseur présente un rapport atomique Ni/Mo égal à 0.4.

Les catalyseurs supportés sont préparés par imprégnation à sec des précurseurs oxydes en solution puis sulfurés in-situ préalablement au test, à une température de 350°C, à l'aide d'une charge gazole de distillation directe additivée de 2% en poids de soufre ex-diméthyldisulfure (DMDS). Après sulfuration in-situ dans l'unité sous pression, la charge issue d'une source renouvelable constituée par l'huile de palme décrite dans le tableau 1a, est envoyée dans chacune des deux zones catalytiques.

La méthode de préparation des catalyseurs ne limite pas la portée de l'invention.

La charge huile de palme totale (F = 100 g/h) est divisée en deux flux, un flux F1 de 40 g/h injecté dans la zone Z1, et un deuxième flux de 60 g/h injecté dans la zone Z2.

La quantité de recycle liquide utilisé est injectée avec la charge intégralement sur la zone Z1, avec un débit RL1=90 g/h.

Le gaz injecté avec la charge est intégralement composé d'hydrogène. Cet hydrogène est injecté intégralement avec les deux flux de charge alimentant les zones Z1 et Z2, avec un débit tel qu'en entrée de chacune des zones catalytiques, on a un même ratio RG1/F1 = RG2/F2 = 700 $Nm^3/m^3$.

Ainsi, le débit massique d'hydrogène envoyé vers la première zone catalytique Z1 représente 35%poids du débit massique total d'hydrogène utilisé dans le procédé d'hydrotraitement.

La pression opératoire totale est de 50 bar rel (5 MPa rel).

Le tableau 1b indique les débits de chacun des deux flux de charge, ainsi que les taux de recycle liquide et les taux de dilution pour chacune des 2 zones catalytiques.

Tableau 1b

| Conditions opératoires de la section hydrotraitement Et caractéristiques de l'effluent produit | | |
|---|---|---|
| Paramètre | Formule de calcul | Valeur |
| Débit charge zone Z1 (F1) (g/h) Débit charge zone Z2 (F2) (g/h) Débit total charge (F) (g/h) | | 40.0 60.0 100.0 |
| Débit de recycle liquide (RL1) (g/h) Débit de recycle liquide (RL2) (g/h) | | 90 0.0 |
| Débit gaz zone Z1 (RG1) (g/h) Débit gaz zone Z2 (RG2) (g/h) | | 2,73 4,10 |
| Taux de recycle liquide zone Z1 (TR1) (g/g) Taux de recycle liquide zone Z2 (TR2) (g/g) | RL1/F1 (RL1 +RL2)F2 | 2,25 1,5 |
| Taux de dilution zone Z1 (TD1) Taux de dilution zone Z2 (TD2) | (RL1+RG1)/F1 (RL1+RG1+RL2+RG2+F1/F2) | 2,32 2,28 |
| Température entrée zone Z1 (°C) Température sortie zone Z2 (°C) Température moyenne (°C) | | 230 312 273 |
| Delta T1 = Tsortie Z1 - Tentrée Z1 | | 83 |

(suite)

| Conditions opératoires de la section hydrotraitement Et caractéristiques de l'effluent produit | | |
|---|---|---|
| Delta T2 = Tsortie Z2 - Tentrée Z2 | | 70 |
| **Caractéristiques effluent produit** Débit d'hydrocarbures produits (g/h) Densité à 15°C (kg/m3) Oxygène (% poids) | | 81.0 785.5 < 0.2 |

On obtient une élimination complète de l'oxygène lors de cette étape d'hydrotraitement. On obtient un produit liquide essentiellement composé d'hydrocarbures avec un rendement de 81.0 % poids.

## EXEMPLE 2 (CONFORME A L'INVENTION)

La même charge que dans l'exemple 1 est traitée dans un réacteur d'hydrotraitement constitué de deux zones catalytiques comportant chacune le même catalyseur que dans l'exemple 1. Dans l'exemple 2 conforme, le débit massique d'hydrogène envoyé vers la première zone catalytique Z1 représente 80%poids du débit massique total d'hydrogène utilisé dans le procédé d'hydrotraitement.

Le même protocole d'activation du catalyseur par sulfuration est appliqué, et la pression opératoire totale est de 50 bar rel (5 MPa rel).

Le tableau 2 indique les débits de chacun des deux flux de charge, ainsi que les taux de recycle liquide et les taux de dilution pour chacune des 2 zones catalytiques

La même quantité de produit liquide est recyclée (R=90 g/h), mais contrairement à l'exemple 1 ce recycle est pour partie envoyé dans la zone catalytique Z1 (RL1=72 g/h) et pour partie envoyé dans la zone catalytique Z2 (RL2=18 g/h). La nature et le débit gazeux recyclé au réacteur d'hydrotraitement est identique globalement à celui de l'exemple 1 (100% hydrogène, RG1= 5,46 g/h, correspondant à un ratio volume H2/volume charge en entrée réacteur de 700 Nm3/m3). Ce débit gazeux est en revanche distribué différemment, puisque le débit massique d'hydrogène envoyé vers la première zone catalytique Z1 représente 80%poids du débit massique total d'hydrogène.

Tableau 2

| Conditions opératoires de la section hydrotraitement Rendement et caractéristiques de l'effluent produit | | |
|---|---|---|
| Paramètre | Formule de calcul | Valeur |
| Débit charge zone Z1 (F1) (g/h) Débit charge zone Z2 (F2) (g/h) Débit total charge (F) (g/h) | | 40.0 60.0 100.0 |
| Débit de recycle liquide (RL1) (g/h) Débit de recycle liquide (RL2) (g/h) | | 72 18 |
| Débit gaz zone Z1 (RG1) (g/h) Débit gaz zone Z2 (RG2) (g/h) | | 5,46 1,36 |
| Taux de recycle liquide zone Z1 (TR1) (g/g) Taux de recycle liquide zone Z2 (TR2) (g/g) | RL1/F1 (RL1+RL2)F2 | 1,80 1,50 |
| Taux de dilution zone Z1 (TD1) Taux de dilution zone Z2 (TD2) | (RL1+RG1)/F1 (RL1+RG1+RL2+RG2+F1/F2) | 1,94 2,28 |
| Température entrée zone Z1 (°C) Température sortie zone Z2 (°C) Température moyenne (°C) | | 220 313 269 |
| Delta T1 = Tsortie Z1 - Tentrée Z1 Delta T2 = Tsortie Z2 - Tentrée Z2 | | 76 65 |

## EXEMPLE 3 (CONFORME A L'INVENTION)

La même charge que dans l'exemple 1 est traitée dans un réacteur d'hydrotraitement constitué de deux zones catalytiques comportant chacune le même catalyseur que dans l'exemple 1. Dans l'exemple 3 conforme, le débit massique d'hydrogène envoyé vers la première zone catalytique Z1 représente 100%poids du débit massique total d'hydrogène utilisé dans le procédé d'hydrotraitement.

Le même protocole d'activation du catalyseur par sulfuration est appliqué, et la pression opératoire totale est de 50 bar rel (5 MPa rel).

Le tableau 3 indique les débits de chacun des deux flux de charge, ainsi que les taux de recycle liquide et les taux de dilution pour chacune des 2 zones catalytiques

La même quantité de produit liquide est recyclée (R=90 g/h), mais contrairement à l'exemple 1 ce recycle est pour partie envoyé dans la zone catalytique Z1 (RL1=60 g/h) et pour partie envoyé dans la zone catalytique Z2 (RL2=30 g/h).

La nature et le débit gazeux recyclé au réacteur d'hydrotraitement est identique globalement à celui de l'exemple 1 (100% hydrogène, RG1=6,83 g/h, correspondant à un ratio volume H2/volume charge en entrée réacteur de 700 Nm3/m3). Ce débit gazeux est en revanche distribué différemment, puisqu'il est intégralement envoyé dans la zone catalytique Z1.

Tableau 3

| Conditions opératoires de la section hydrotraitement Rendement et caractéristiques de l'effluent produit | | |
|---|---|---|
| Paramètre | Formule de calcul | Valeur |
| Débit charge zone Z1 (F1) (g/h) Débit charge zone Z2 (F2) (g/h) Débit total charge (F) (g/h) | | 40.0 60.0 100.0 |
| Débit de recycle liquide (R1) (g/h) Débit de recycle liquide (R2) (g/h) | | 60.0 30.0 |
| Débit gaz zone Z1 (R1g) (g/h) Débit gaz zone Z2 (R2g) (g/h) | | 6,83 0.00 |
| Taux de recycle liquide zone Z1 (TRL1) (g/g) Taux de recycle liquide zone Z2 (TRL2) (g/g) | RL1/F1 (RL1+RL2)F2 | 1,50 1,50 |
| Taux de dilution zone Z1 (TDL1) Taux de dilution zone Z2 (TDL2) | (RL1+RG1)/F1 (RL1+RG1+RL2+RG2+F1/F2) | 1,67 2,28 |
| Température entrée zone Z1 (°C) Température sortie zone Z2 (°C) Température moyenne (°C) | | 215 313 266 |
| Delta T1 = Tsortie Z1 - Tentrée Z1 Delta T2 = Tsortie Z2 - Tentrée Z2 | | 73 65 |
| **Caractéristiques effluent produit** Débit d'hydrocarbures produits (g/h) Densité à 15°C (kg/m3) Oxygène (% poids) | | 83,0 786,3 < 0,2 |

Les exemples 1 à 3 démontrent que la mise en oeuvre de la présente invention permet de gérer un taux de recycle faible dans toutes les zones catalytiques grâce à l'application d'un fort débit d'hydrogène à l'entrée du premier lit contrairement à l'exemple 1 non conforme dans lequel l'hydrogène est distribué sur les lits catalytiques de manière uniforme et ou l'exothermie n'est pas maitrisée, les delta de température entre la sortie et l'entrée des lits catalytiques étant trop élevés.

Par ailleurs, la bonne gestion de l'exothermie dans les exemples 2 et 3 conformes à l'invention fait que l'on opère a une température moyenne de lit abaissée par rapport à l'exemple 1 non conforme, ce qui permet une désactivation du catalyseur plus faible et donc une durée de vie du catalyseur plus longue.

**Revendications**

1. Procédé d'hydrotraitement d'une charge issue de sources renouvelables pour produire des hydrocarbures paraffiniques en présence d'hydrogène dans un réacteur à lit fixe ayant plusieurs zones catalytiques disposées en série et comprenant chacune au moins un catalyseur d'hydrotraitement dans lequel :

   a) le flux de la charge totale F est divisé en un nombre de différents flux partiels de charge F1 à Fn égal au nombre de zones catalytiques n, avec n entier compris entre 1 et 10 dans le réacteur, le premier flux partiel de charge F1 étant injecté dans la première zone catalytique Z1, le deuxième flux partiel de charge F2 étant injecté dans la deuxième zone catalytique Z2 et ainsi de suite, si n est supérieur à 2, le procédé d'hydrotraitement opérant à une température comprise entre 180 et 400°C, à une pression comprise entre 0,1 MPa et 15 MPa, à une vitesse spatiale horaire comprise entre 0,1 $h^{-1}$ et 10 $h^{-1}$, et avec un ratio entre le débit d'hydrogène total et le débit de charge totale est compris entre 150 et 1500 $Nm^3/m^3$, le débit massique d'hydrogène envoyé vers la première zone catalytique représentant plus de 80 % en poids du débit massique total d'hydrogène utilisé dans le procédé d'hydrotraitement, pour produire en sortie de réacteur au moins un effluent contenant des hydrocarbures paraffiniques,
   b) ledit effluent issu de l'étape a) est soumis à au moins une étape de séparation permettant de séparer au moins une fraction gazeuse et au moins une fraction liquide contenant les hydrocarbures paraffiniques,
   c) au moins une partie de ladite fraction liquide contenant les hydrocarbures paraffiniques est recyclée à la première zone catalytique et aux zones catalytiques suivantes de sorte que

      - le taux de recycle local sur chacun des lits c'est-à-dire le rapport massique entre le flux de ladite fraction liquide recyclée et le flux partiel de charge introduit dans la zone catalytique Fn soit inférieur ou égal à 2,
      - le taux de dilution local sur chacun des lits c'est-à-dire le rapport massique entre la quantité des flux liquides et gazeux diluants introduits dans la zone catalytique n et le flux partiel de charge introduit dans la zone catalytique Fn soit inférieur à 4.

2. Procédé selon la revendication précédente dans lequel la charges issues de sources renouvelables selon l'invention sont choisies parmi les huiles végétales, les huiles d'algues ou algales, les huiles de poissons, les huiles alimentaires usagées, et les graisses d'origine végétale ou animale, ou des mélanges de telles charges, contenant des triglycérides et/ou des acides gras libres et/ou des esters.

3. Procédé selon l'une des revendications 1 ou 2 dans lequel le débit massique d'hydrogène envoyé vers la première zone catalytique représentant plus de 90 % en poids du débit massique total d'hydrogène utilisé dans le procédé d'hydrotraitement.

4. Procédé selon la revendication 3 dans lequel la totalité du débit massique d'hydrogène utilisé dans le procédé d'hydrotraitement est envoyée dans la première zone catalytique Z1.

5. Procédé selon l'une des revendications 1 à 4 dans lequel le taux de recycle local sur chacun des lits c'est-à-dire le rapport massique entre le flux de ladite fraction liquide recyclée et le flux partiel de charge introduit dans la zone catalytique Fn est inférieur ou égal à 1,7.

6. Procédé selon la revendication 3 dans lequel le taux de recycle local sur chacun des lits c'est-à-dire le rapport massique entre le flux de ladite fraction liquide recyclée et le flux partiel de charge introduit dans la zone catalytique Fn est inférieur ou égal à 1,5.

7. Procédé selon l'une des revendications 1 à 6 dans lequel le catalyseur d'hydrotraitement comprend une fonction hydro-déshydrogénante comprenant au moins un métal du groupe VIII choisis parmi le nickel et le cobalt, pris seul ou en mélange, éventuellement en association avec au moins un métal du groupe VIB choisi parmi le molybdène et le tungstène, pris seul ou en mélange et un support choisi dans le groupe formé par l'alumine, la silice, les silices-alumines, la magnésie, les argiles et les mélanges d'au moins deux de ces minéraux.

8. Procédé selon l'une des revendications 1 à 7 dans lequel l'étape b) de séparation est réalisée en au moins deux étapes dans un séparateur haute température haute pression permettant de séparer une fraction gazeuse comprenant l'hydrogène, le CO, le $CO_2$, l'$H_2S$, les gaz légers et de l'eau formée lors des réactions d'hydrodésoxygénation et une fraction liquide contenant les hydrocarbures paraffiniques, la fraction gazeuse étant ensuite envoyée dans séparateur basse température haute pression de manière à séparer une fraction gazeuse comprenant l'hydrogène,

le CO, le CO$_2$, l'H$_2$S, les gaz légers et l'eau formée lors des réactions d'hydrodésoxygénation et une fraction liquide contenant les hydrocarbures paraffiniques.

9. Procédé selon l'une des revendications 1 à 7 dans lequel l'étape b) de séparation est réalisée en deux étapes, la première séparation étant effectuée dans un séparateur basse température haute pression suivie d'une étape de séparation d'au moins une partie de l'eau formée.

10. Procédé selon l'une des revendications 1 à 9 dans lequel ladite fraction gazeuse séparée à l'issue de l'étape b) et comprenant l'hydrogène est recyclée dans l'étape a).

11. Procédé selon l'une des revendications 1 à 10 dans lequel une partie au moins de la fraction liquide contenant les hydrocarbures paraffiniques obtenue à l'issue de l'étape b) de séparation est hydroisomérisée en présence d'un catalyseur d'hydroisomérisation.

12. Procédé selon la revendication 11 dans lequel ladite étape d'hydroisomérisation opère à une température comprise entre 150°C et 500°C, à une pression comprise entre 1 MPa et 10 MPa, à une vitesse volumique horaire avantageusement comprise entre 0,1 h-1 et 10 h-1, à un débit d'hydrogène tel que le rapport volumique hydrogène/hydrocarbures est avantageusement compris entre 70 et 1000 Nm$^3$/m$^3$ de charge.

13. Procédé selon l'une des revendications 11 ou 12 dans lequel le catalyseur d'hydroisomérisation comprend au moins un métal du groupe VIII choisi parmi le platine et le palladium actifs sous leur forme réduite et le nickel et le cobalt utilisés sous leur forme sulfurée et/ou au moins un métal du groupe VIB choisi parmi le molybdène ou le tungstène et au moins un tamis moléculaire ou un support minéral amorphe.

14. Procédé selon l'une des revendications 11 à 13 dans lequel l'effluent de l'étape d'hydroisomérisation est soumis à au moins une étape de séparation et au moins une étape de fractionnnement permettant d'obtenir une coupe gazeuse, une coupe essence, et au moins une coupe distillats moyens contenant du kérosène et/ou du diesel.

**Patentansprüche**

1. Verfahren zur Wasserstoffbehandlung einer Charge aus erneuerbaren Quellen, um paraffinische Kohlenwasserstoffe in Gegenwart von Wasserstoff in einem Festbettreaktor mit mehreren katalytischen Zonen, die in Reihe angeordnet sind, die jeweils mindestens einen Katalysator zur Kohlenwasserstoffbehandlung umfassen, herzustellen, wobei:

a) der Strom der gesamten Charge F in eine Anzahl verschiedener Teilströme der Charge F1 bis Fn aufgeteilt wird, die der Anzahl der katalytischen Zonen n in dem Reaktor entspricht, wobei n eine ganze Zahl im Bereich zwischen 1 und 10 ist, wobei der erste Teilstrom der Charge F1 in die erste katalytische Zone Z1 eingespritzt wird, der zweite Teilstrom der Charge F2 in die zweite katalytischen Zone Z2 eingespritzt wird und so weiter, wenn n größer als 2 ist, wobei das Verfahren zur Wasserstoffbehandlung bei einer Temperatur im Bereich zwischen 180 und 400 °C, bei einem Druck im Bereich zwischen 0,1 MPa und 15 MPa, bei einer Raumgeschwindigkeit pro Stunde im Bereich zwischen 0,1 h$^{-1}$ und 10 h$^{-1}$ und mit einem Verhältnis der Flussrate des gesamten Wasserstoffs zur Flussrate der gesamten Charge im Bereich zwischen 150 und 1.500 Nm$^3$/m$^3$ arbeitet, wobei der Wasserstoff-Massenstrom, der zur ersten katalytischen Zone geleitet wird, mehr als 80 Gew.-% des gesamten Wasserstoff-Massenstroms darstellt, der in dem Verfahren zur Wasserstoffbehandlung verwendet wird, um am Reaktorauslass mindestens einen Abfluss zu erzeugen, der paraffinische Kohlenwasserstoffe enthält,
b) der aus Schritt a) erhaltene Abfluss mindestens einem Schritt zum Abscheiden unterzogen wird, der es ermöglicht, mindestens eine gasförmige Fraktion und mindestens eine flüssige Fraktion, die die paraffinischen Kohlenwasserstoffe enthält, abzuscheiden,
c) mindestens ein Teil der flüssigen Fraktion, die die paraffinischen Kohlenwasserstoffe enthält, in die erste katalytische Zone und in die folgenden katalytischen Zonen recycelt wird, so dass

- die lokale Recyclingrate auf jedem der Betten, das heißt das Masseverhältnis zwischen dem Strom der recycelten flüssigen Fraktion und dem Teilstrom der Charge, der in die katalytische Zone Fn eingeführt wird, kleiner oder gleich 2 ist,
- die lokale Verdünnungsrate auf jedem der Betten, das heißt das Masseverhältnis zwischen der Menge der verdünnenden flüssigen und gasförmigen Ströme, die in die katalytische Zone n eingeführt werden, und der Teilstrom der Charge, der in die katalytische Zone Fn eingeführt wird, kleiner als 4 ist.

2. Verfahren nach dem vorhergehenden Anspruch, wobei die aus erneuerbaren Quellen stammenden Chargen gemäß der Erfindung ausgewählt sind aus Pflanzenölen, Algenölen oder Algen, Fischölen, Altspeiseölen und Fetten pflanzlichen oder tierischen Ursprungs, oder Gemischen solcher Chargen, die Triglyceride und/oder freie Fettsäuren und/oder Ester enthalten.

3. Verfahren nach einem der Ansprüche 1 oder 2, wobei der Wasserstoff-Massenstrom, der zur ersten katalytische Zone geleitet wird, mehr als 90 Gew.-% des gesamten Wasserstoff-Massenstroms darstellt, der in dem Verfahren zur Wasserstoffbehandlung verwendet wird.

4. Verfahren nach Anspruch 3, wobei der gesamte Wasserstoff-Massenstrom, der in dem Verfahren zur Wasserstoffbehandlung verwendet wird, in die erste katalytische Zone Z1 geleitet wird.

5. Verfahren nach einem der Ansprüche 1 bis 4, wobei die lokale Recyclingrate auf jedem der Betten, das heißt das Masseverhältnis zwischen dem Strom der recycelten flüssigen Fraktion und dem Teilstrom des Einsatzes, der in die katalytische Zone Fn eingeführt wird, kleiner oder gleich 1,7 ist,

6. Verfahren nach Anspruch 3, wobei die lokale Recyclingrate auf jedem der Betten, das heißt das Masseverhältnis zwischen dem Strom der recycelten flüssigen Fraktion und dem Teilstrom der Charge, der in die katalytische Zone Fn eingeführt wird, kleiner oder gleich 1,5 ist.

7. Verfahren nach einem der Ansprüche 1 bis 6, wobei der Katalysator zur Wasserstoffbehandlung eine hydrierende-dehydrierende Funktion umfasst, die mindestens ein Metall der Gruppe VIII, ausgewählt aus Nickel und Cobalt, allein oder im Gemisch, gegebenenfalls in Kombination mit mindestens einem Metall der Gruppe VIB, ausgewählt aus Molybdän und Wolfram, allein oder im Gemisch, und einen Träger, ausgewählt aus der Gruppe gebildet aus Aluminiumoxid, Siliciumdioxid, Siliciumdioxid-Aluminiumoxiden, Magnesiumoxid, Tonen und Gemischen aus mindestens zwei dieser Mineralien umfasst.

8. Verfahren nach einem der Ansprüche 1 bis 7, wobei Schritt b) zum Abscheiden in mindestens zwei Schritten durchgeführt wird, in einem Hochtemperatur-Hochdruckabscheider, der es ermöglicht, eine gasförmige Fraktion, umfassend Wasserstoff, CO, $CO_2$, $H_2S$, Leichtgase und das während der Hydrodeoxigenierungsreaktionen gebildete Wasser und eine flüssige Fraktion, enthaltend die paraffinischen Kohlenwasserstoffe, abzuscheiden, wobei die gasförmige Fraktion anschließend in einen Niedrigtemperatur-Hochdruckabscheider geleitet wird, um eine gasförmige Fraktion, umfassend Wasserstoff, CO, $CO_2$, $H_2S$, die Leichtgase und das während der Hydrodeoxigenierungsreaktionen gebildete Wasser und eine flüssige Fraktion, die die paraffinischen Kohlenwasserstoffe enthält, abzuscheiden.

9. Verfahren nach einem der Ansprüche 1 bis 7, wobei Schritt b) zum Abscheiden in zwei Schritten ausgeführt wird, wobei die erste Abscheidung in einem Niedrigtemperatur-Hochdruckabscheider durchgeführt wird, gefolgt von einem Schritt zum Abscheiden mindestens eines Teils des gebildeten Wassers.

10. Verfahren nach einem der Ansprüche 1 bis 9, wobei die am Ende von Schritt b) abgeschieden und Wasserstoff enthaltende gasförmige Fraktion in Schritt a) recycelt wird.

11. Verfahren nach einem der Ansprüche 1 bis 10, wobei mindestens ein Teil der die paraffinischen Kohlenwasserstoffe enthaltenden flüssigen Fraktion, die am Ende von Schritt b) zum Abtrennen erhalten wurde, in Gegenwart eines Hydroisomerisierungskatalysators hydroisomerisiert wird.

12. Verfahren nach Anspruch 11, wobei der Schritt zur Hydroisomerisierung bei einer Temperatur im Bereich zwischen 150 °C und 500 °C, bei einem Druck im Bereich zwischen 1 MPa und 10MPa, bei einer Raumgeschwindigkeit pro Stunde vorteilhafterweise im Bereich zwischen 0,1 $h^{-1}$ und 10 $h^{-1}$, bei einem Wasserstoffdurchfluss arbeitet, der so ist, dass das Volumenverhältnis Wasserstoff/Kohlenwasserstoffe vorteilhafterweise im Bereich zwischen 70 und 1.000 $Nm^3/m^3$ der Charge liegt.

13. Verfahren nach einem der Ansprüche 11 oder 12, wobei der Hydroisomerisierungskatalysator mindestens ein Metall der Gruppe VIII, ausgewählt aus aktivem Platin und aktivem Palladium in ihrer reduzierten Form, und Nickel und Cobalt, die in ihrer Sulfidform verwendet werden, und/oder mindestens ein Metall der Gruppe VIB, ausgewählt aus Molybdän oder Wolfram, und mindestens ein Molekularsieb oder einen amorphen mineralischen Träger umfasst.

14. Verfahren nach einem der Ansprüche 11 bis 13, wobei der Abfluss aus dem Schritt zur Hydroisomerisierung mindestens einem Schritt zum Abscheiden und mindestens einem Schritt zum Fraktionieren unterzogen wird, die es ermöglichen, einen gasförmigen Schnitt, einen Benzinschnitt, und mindestens einen Mitteldestillatschnitt, der Kerosin und/oder Diesel enthält, zu erhalten.

**Claims**

1. A process for the hydrotreatment of a feed obtained from renewable sources in order to produce paraffinic hydrocarbons carried out in the presence of hydrogen in a fixed bed reactor having a plurality of catalytic zones disposed in series and each comprising at least one hydrotreatment catalyst, in which:

   a) the total stream of feed F is divided into a number of different part-streams of feed F1 to Fn equal to the number of catalytic zones n, where n is a whole number in the range 1 to 10, in the reactor, the first part-stream of feed F1 being injected into the first catalytic zone Z1, the second part-stream of feed F2 being injected into the second catalytic zone Z2 and so on if n is greater than 2, the hydrotreatment process being operated at a temperature in the range 180°C to 400°C, at a pressure in the range 0.1 MPa to 15 MPa, at an hourly space velocity in the range 0.1 $1h^{-1}$ to 10 $h^{-1}$, and with a ratio of the flow rate of hydrogen to the flow rate of feed in the range 150 to 1500 $Nm^3/m^3$, the mass flow rate of hydrogen sent to the first catalytic zone representing more than 80% by weight of the total mass flow rate of hydrogen used in the hydrotreatment process, in order to produce at least one effluent containing paraffinic hydrocarbons from the reactor outlet,
   b) said effluent obtained from step a) undergoes at least one separation step in order to separate at least one gaseous fraction and at least one liquid fraction containing paraffinic hydrocarbons,
   c) at least a portion of said liquid fraction containing paraffinic hydrocarbons is recycled to the first catalytic zone and to the following catalytic zones in a manner such that

   - the local recycle ratio for each of the beds, i.e. the weight ratio between the stream of said liquid recycle fraction and the part-stream of feed introduced into the catalytic zone Fn is 2 or less,
   - the local dilution ratio over each of the beds, i.e. the weight ratio between the quantity of liquid and gaseous diluting streams introduced into the catalytic zone n and the part-stream of feed introduced into the catalytic zone Fn is less than 4.

2. The process according to the preceding claim, in which the feeds obtained from renewable sources in accordance with the invention are selected from vegetable oils, oils from algae or algal oils, fish oils, spent cooking oils, and fats of vegetable or animal origin, or mixtures of such feeds, containing triglycerides and/or free fatty acids and/or esters.

3. The process according to claim 1 or claim 2, in which the mass flow rate of hydrogen sent to the first catalytic zone represents more than 90% by weight of the total mass flow rate of hydrogen used in the hydrotreatment process.

4. The process according to claim 3, in which the totality of the mass flow of hydrogen used in the hydrotreatment process is sent to the first catalytic zone Z1.

5. The process according to one of claims 1 to 4, in which the local recycle ratio over each of the beds, i.e. the weight ratio between the stream of said liquid recycle fraction and the part-stream of feed introduced into the catalytic zone Fn is less than or equal to 1.7.

6. The process according to claim 3, in which the local recycle ratio over each of the beds, i.e. the weight ratio between the stream of said liquid recycle fraction and the part-stream of feed introduced into the catalytic zone Fn, is less than or equal to 1.5.

7. The process according to one of claims 1 to 6, in which the hydrotreatment catalyst comprises a hydrodehydrogenating function comprising at least one metal from group VIII selected from nickel and cobalt, used alone or as a mixture, optionally in association with at least one metal from group VIB selected from molybdenum and tungsten, used alone or as a mixture, and a support selected from the group formed by alumina, silica, silica-aluminas, magnesia, clays and mixtures of at least two of these minerals.

8. The process according to one of claims 1 to 7, in which the separation step b) is carried out in at least two steps in a high temperature high pressure separator in order to separate a gaseous fraction comprising hydrogen, CO, $CO_2$, $H_2S$, light gases and water formed during the hydrodeoxygenation reactions and a liquid fraction containing paraffinic hydrocarbons, the gaseous fraction then being sent to a low temperature high pressure separator in order to separate a gaseous fraction comprising hydrogen, CO, $CO_2$, $H_2S$, light gases and water formed during the hydrodeoxygenation reactions and a liquid fraction containing paraffinic hydrocarbons.

9. The process according to one of claims 1 to 7, in which the separation step b) is carried out in two steps, the first separation being carried out in a low temperature high pressure separator, followed by a step for separation of at least a portion of the water formed.

10. The process according to one of claims 1 to 9, in which said gaseous fraction separated at the end of step b) and comprising hydrogen is recycled to step a).

11. The process according to one of claims 1 to 10, in which at least a portion of the liquid fraction containing the paraffinic hydrocarbons obtained from the separation step b) is hydroisomerized in the presence of a hydroisomerization catalyst.

12. The process according to claim 11, in which said hydroisomerization step is operated at a temperature in the range 150°C to 500°C, at a pressure in the range 1 MPa to 10 MPa, at an hourly space velocity advantageously in the range 0.1 $h^{-1}$ to 10 $h^{-1}$, and at a hydrogen flow rate such that the volume ratio of hydrogen/hydrocarbons is advantageously in the range 70 to 1000 $Nm^3/m^3$ of feed.

13. The process according to claim 11 or claim 12, in which the hydroisomerization catalyst comprises at least one metal from group VIII selected from platinum and palladium which are activated in their reduced form and nickel and cobalt used in their sulphide form, and/or at least one metal from group VIB selected from molybdenum and tungsten, and at least one molecular sieve or an amorphous mineral support.

14. The process according to one of claims 11 to 13, in which the effluent from the hydroisomerization step undergoes at least one separation step and at least one step for fractionation in order to obtain a gaseous cut, a gasoline cut and at least one middle distillates cut containing kerosene and/or diesel.

Figure 1

Figure 2

## RÉFÉRENCES CITÉES DANS LA DESCRIPTION

**Documents brevets cités dans la description**

- EP 1741768 A1
- US 20090318737 A
- US 20090082606 A
- EP 2226375 A1
- US 7070745 B

**Littérature non-brevet citée dans la description**

- **W. M MEIER ; D. H. OISON ; CH. BAERLOCHER.** Atlas of Zeolite Structure Types. Elsevier, 2001